# EUROPÄISCHE PATENTSCHRIFT

(11) **EP 3 918 135 B1**
(45) Veröffentlichungstag und Bekanntmachung des Hinweises auf die Patenterteilung: **14.06.2023**
(21) Anmeldenummer: 19808735.5
(22) Anmeldetag: 19.11.2019
(51) Int. Cl.: E02D 27/42, F03D 13/25

(54) **MONOPILEFUNDAMENT UND MONOPILEFUNDAMENT-INSTALLATION FÜR EIN OFFSHORE-BAUWERK SOWIE VERFAHREN ZUM ERRICHTEN EINER MONOPILEFUNDAMENT-INSTALLATION**
MONOPILE FOUNDATION, ASSEMBLY OF A MONOPILE FOUNDATION AND METHOD OF ERECTING A MONOPILE FOUNDATION
FONDATION AVEC UN MONOPIEU, ARRANGEMENT D'UN MONOPIEU POUR UNE FONDATION ET PROCÉDÉ DE FAIRE UNE FONDATION AVEC UN MONOPIEU

(30) Priorität: 31.01.2019 DE 102019102464
(43) Veröffentlichungstag der Anmeldung: 08.12.2021
(73) Patentinhaber: RWE Renewables GmbH, 45145 Essen (DE)
(72) Erfinder: BARTMINN, Daniel, 25335 Elmshorn (DE); THOMAS, Christopher Mark, South Wales CF831AH (GB)
(74) Vertreter: Cohausz & Florack
(86) Internationale Anmeldenummer: PCT/EP2019/081794
(87) Internationale Veröffentlichungsnummer: WO 2020/156699

(56) Entgegenhaltungen:
- EP-A1- 3 103 924
- WO-A1-2015/061862
- US-A1- 2005 083 783

## Beschreibung

Die Erfindung betrifft ein Monopilefundament für ein Offshore-Bauwerk, insbesondere für eine Windkraftanlage, mit einem Gründungspfahl zum Tragen des Bauwerks und einer sich außerhalb an den Gründungspfahl anschließenden Gründungsverstärkung, wobei die Gründungsverstärkung eine Manschette, einen Kragen und wenigstens eine Stütze aufweist, wobei die Manschette dem Gründungspfahl zugeordnet und der Kragen über die wenigstens eine Stütze nach außen von der Manschette beabstandet gehalten ist, wobei der Gründungspfahl einen Gründungsabschnitt zum Einbringen in den Meeresboden und einen Verstärkungsabschnitt zum Verbinden des Gründungspfahls mit der Manschette oberhalb des Meeresbodens aufweist und wobei der Kragen zum wenigstens teilweisen Einbringen in den Meeresboden ausgebildet ist. Ferner betrifft die Erfindung eine Monopilefundament-Installation für ein Offshore-Bauwerk, insbesondere für eine Windkraftanlage, mit einem solchen, in einem Meeresboden verankerten Monopilefundament. Des Weiteren betrifft die Erfindung ein Verfahren zum Errichten einer Monopilefundament-Installation mit einem solchen Monopilefundament.

Zur Gründung von Offshore-Bauwerken, wie insbesondere Windkraftanlagen, sind unterschiedliche Varianten bekannt. Für Wassertiefen etwa zwischen 4 m und 50 m haben sich insbesondere sogenannte Monopiles, also einzelne Pfähle, als eine wirtschaftliche Lösung herausgestellt. Bei diesem Fundamenttyp handelt es sich meist um einen Gründungspfahl in Form eines Stahlrohrs mit einem Durchmesser von mehreren Metern, das mit seinem offenen Ende in den Meeresboden gerammt oder über ein Vibrationsverfahren in den Meeresboden eingeführt wird. Um eine ausreichende Stabilität des Gründungspfahls zu gewährleisten, der das Bauerwerk, insbesondere die Windkraftanlage, trägt, wird der Gründungspfahl meist wenigstens mit seiner halben Länge, etwa über 15 m - 50 m, in den Meeresboden getrieben. Dies ist jedoch nur in sandigen oder bindigen Böden mit vertretbarem Aufwand möglich. Für die Errichtung von Offshore-Bauwerken an Stellen, an denen damit zu rechnen ist, dass der Gründungspfahl beim Einbringen in den Meeresboden auf Gestein trifft, wurde durch zusätzliche Maßnahmen versucht, die Einbettungslänge oder Eindringtiefe der Gründungspfähle in den Meeresboden zu verringern, ohne die Steifigkeit des Monopilefundaments signifikant zu beeinträchtigen.

Hierzu ist beispielsweise in der WO 2016/198272 A1 oder auch in der Druckschrift US 2005/0083783 A1 eine Gründungsverstärkung vorgeschlagen worden, die eine außen an dem Gründungspfahl anliegende Manschette und einen teilweise in den Meeresboden eingelassenen Kragen aufweist. Der Kragen und die Manschette werden dabei über Stützen in einem vorbestimmten Abstand zueinander gehalten. Die Gründungsverstärkung bildet somit eine Art Sockel für den in der Manschette aufgenommenen Gründungspfahl, welcher die Steifigkeit des Fundaments erhöht und den Gründungspfahl gegenüber wankenden Bewegungen am Meeresboden abstützt. Daher kann die Einbettungslänge des Gründungspfahls in dem Meeresboden gesenkt werden. Die Errichtung des entsprechenden Monopilefundaments erfolgt, indem zunächst die Gründungsverstärkung mit dem Kragen in den Meeresboden eingetrieben wird. Anschließend wir der Gründungspfahl durch die vom Meeresboden und gegenüber dem Kragen nach oben vorstehende Manschette der Gründungsverstärkung geführt und in den Meeresboden eingetrieben. Dies kann durch Vibration oder durch Rammen erfolgen. Nachdem der Gründungspfahl in den Meeresboden eingetrieben worden ist, wird der Zwischenraum zwischen dem Gründungspfahl und der Manschette ausgegossen.

Aber auch an Monopilefundamente, die hinreichend tief in sandige Meeresboden eingetrieben werden können und mithin keine Gründungsverstärkung erfordern, können sich mit der Zeit lockern. Ein Gründungspfahl kann sich beispielsweise in Folge von rhythmisch auftretenden Lasten lockern, die durch Wind und/oder Wellen hervorgerufen werden können. Alternativ oder zusätzlich kann die Meeresströmung in der Nähe der Gründungspfähle beschleunigt werden, so dass Meeresboden abgetragen wird und Vertiefungen im Meeresboden, beispielsweise sogenannter Kolks, entstehen. Hier müssen dann Maßnahmen getroffen werden, um die Stabilität des Offshore-Bauwerks weiter zu gewährleisten. Zudem ist es schwierig festzustellen, ob der Gründungspfahl beim Gründen mit der gewünschten Länge in den Meeresboden getrieben werden kann. Selbst bei an sich sandigen und für das Gründen von Monopilefundamenten gut geeigneten Meeresboden kann es vorkommen, dass der Gründungspfahl auf Gestein, beispielweise in Form von Findlingen trifft. Auch ist es denkbar, dass Böden dichter und steifer sind als erwartet und daher das ausgewählte Installationsgerät nicht kraftvoll genug für die Installation ist. Dies kann verhindern, dass die gewünschte Einbettungstiefe des Gründungspfahls im Meeresboden nicht erreicht wird. Die Gründung von Monopiles ist mithin noch nicht in allen Fällen in zufriedenstellender Weise möglich.

Daher liegt der vorliegenden Erfindung die Aufgabe zugrunde, das Monopilefundament, die Monopilefundament-Installation und das Verfahren jeweils der eingangs genannten und zuvor näher erläuterten Art derart auszugestalten und weiterzubilden, dass eine zufriedenstellende Gründung für solche Gründungspfähle erreicht werden kann, deren ursprüngliche Installation sich als unzureichend herausstellt, weil die gewünschte Einbettungstiefe aufgrund von nicht bekanntem Gestein reduziert ist oder weil sich das Monopilefundament mit der Zeit lockert. Diese Aufgabe ist bei einem Monopilefundament nach dem Oberbegriff des Anspruchs 1 dadurch gelöst, dass jedes Verstärkungselement ein Manschettenelement der Manschette, ein Kragenelement des Kragens und wenigstens ein Stützelement der Stütze aufweist.

Die genannte Aufgabe ist ferner gemäß Anspruch 9 gelöst durch eine Monopilefundament-Installation für ein Offshore-Bauwerk, insbesondere für eine Windkraftanlage, mit einem in einem Meeresboden verankerten Monopilefundament nach einem der Ansprüche 1 bis 8 wobei der Gründungspfahl mit seinem Gründungsabschnitt in den Meeresboden eingebracht ist, wobei der Kragen wenigstens teilweise, insbesondere vollständig, in den Meeresboden eingebracht ist, wobei die Gründungsverstärkung in Umfangsrichtung des Gründungspfahls mehrere, insbesondere zwei, drei oder vier, nebeneinander angeordnete Verstärkungselemente aufweist und wobei die in Umfangsrichtung jeweils zueinander benachbarten Seiten der Verstärkungselemente formschlüssig, gelenkig und/oder kraftschlüssig untereinander verbunden sind.

Des Weiteren wird die zuvor genannte Aufgabe gemäß Anspruch 13 gelöst durch ein Verfahren zum Errichten einer Monopilefundament-Installation nach einem der Ansprüche 9 bis 12 mit einem Monopilefundament nach einem der Ansprüche 1 bis 8,
- bei dem der Gründungspfahl mit dem Gründungsabschnitt, vorzugsweise über Vibration und/oder Impulsrammung, in den Meeresboden eingebracht wird,
- bei dem in Umfangsrichtung des Gründungspfahls die Kragen mehrerer, insbesondere von zwei, drei oder vier, Verstärkungselemente, vorzugsweise über Vibration, wenigstens teilweise in den Meeresboden eingebracht werden,
- bei dem anschließend die Verstärkungselemente durch das wenigstens teilweise Einbringen in den Meeresboden, insbesondere nacheinander, oder vor dem wenigstens teilweisen Einbringen in den Meeresboden nebeneinander positioniert werden,
- bei dem die jeweils zueinander benachbarten Seiten der angrenzenden Verstärkungselemente, vorzugsweise durch das wenigstens teilweise Einbringen in den Meeresboden oder vor dem wenigstens teilweisen Einbringen in den Meeresboden, formschlüssig, gelenkig und/oder kraftschlüssig miteinander verbunden werden und
- bei dem der Verstärkungsabschnitt des Gründungspfahls oberhalb des Meeresbodens mit der Manschette der Gründungsverstärkung verbunden wird.

Die mehrteilige Ausgestaltung der Gründungsverstärkung ermöglicht eine nachträgliche Ausrüstung eines Monopilefundaments mit einer Gründungsverstärkung immer dann, wenn dies aus den jeweiligen Gründen des Einzelfalls angezeigt ist. Die Nachrüstung mit einer einteiligen Gründungsverstärkung wäre nicht denkbar, da eine einteilige Gründungsverstärkung nach dem Installieren des Offshore-Bauwerks nicht mehr über den Gründungspfahl gezogen werden könnte, beispielsweise auch weil Anbauten wie Bootsanlegefender und Leitern im Weg wären. Durch die mehrteilige Ausbildung der Gründungsverstärkung ist es jedoch möglich, die einzelnen Verstärkungselemente nachträglich von außen heranzuführen und die einzelnen Verstärkungselemente anschließend trotzdem zu einer gemeinsamen Gründungsverstärkung zu verbinden. Dies kann auf unterschiedliche Arten jedoch jeweils formschlüssig, gelenkig und/oder kraftschlüssig erfolgen. Die einzelnen Verstärkungselemente werden in Umfangsrichtung um den Gründungspfahl verteilt nebeneinander angeordnet und somit in einer Richtung senkrecht oder quer zur Längsachse des Gründungspfahls miteinander verbunden. Die Verbindung ist vorzugsweise so vorgesehen, dass die benachbarten Verstärkungselemente sowohl in Umfangsrichtung als auch in radialer Richtung ausgehend von der Längsachse des Gründungspfahls gegeneinander fixiert bzw. arretiert sind. Um den Montageaufwand gering zu halten, ist es in diesem Zusammenhang besonders bevorzugt, wenn lediglich zwei, drei oder vier Verstärkungselemente vorgesehen und miteinander zu einer Gründungsverstärkung gefügt werden.

Hinsichtlich der Monopilefundament-Installation für Offshore-Bauwerke, insbesondere für eine Windkraftanlage, bedeutet dies, dass einerseits der Gründungspfahl mit seinem Gründungsabschnitt in den Meeresboden eingebracht ist und andererseits der Kragen wenigstens teilweise im Meeresboden steckt, um die Gründungsverstärkung so im Meeresboden abzustützen. Die Gründungsverstärkung setzt sich dabei aus in Umfangsrichtung um den Gründungspfahl verteilt angeordneten und in Umfangsrichtung einander benachbarten Verstärkungselementen zusammen. Dabei ist es aus den genannten Gründen bevorzugt, wenn nicht mehr als zwei, drei oder vier Verstärkungselemente die Gründungsverstärkung bilden. Die Verstärkungselemente sind dabei an in Umfangsrichtung jeweils zueinander benachbarten Seiten der jeweils benachbarten Verstärkungselemente formschlüssig, gelenkig und/oder kraftschlüssig miteinander verbunden.

Durch die mehrteilige Ausgestaltung der Gründungsverstärkung werden die Vorteile des Monopilefundaments und der Monopilefundament-Installation in besonderem Maße genutzt, wenn der Gründungspfahl mit dem Gründungsabschnitt in den Meeresboden eingebracht wird und erst anschließend in Umfangsrichtung des Gründungspfahls die Kragen mehrerer, insbesondere von zwei, drei oder vier, Verstärkungselementen nacheinander oder gemeinsam und wenigstens teilweise in den Meeresboden eingebracht werden. Dabei kann das Einlassen des Gründungspfahls und/oder der Verstärkungselemente bevorzugt im Vibrationsverfahren oder durch Impulsrammung erfolgen. Der Gründungspfahl und/oder die Verstärkungselemente können alternativ auch in den Meeresboden eingespült oder auf sonstige Weise in den Meeresboden eingelassen werden. Der Montageaufwand kann weiter reduziert werden, wenn die Verstärkungselemente durch das wenigstens teilweise Einbringen in den Meeresboden nacheinander nebeneinander positioniert und die jeweils zueinander benachbarten Seiten der angrenzenden Verstärkungselemente formschlüssig und/oder kraftschlüssig miteinander verbunden werden. Dabei ist es besonders einfach und zweckmäßig, wenn die jeweils zueinander benachbarten Verstärkungselemente durch das wenigstens teilweise Einbringen in den Meeresboden miteinander verbunden werden.

Der Montageaufwand kann aber auch weiter reduziert werden, wenn die Verstärkungselemente bereits vor dem Einbringen in den Meeresboden zueinander positioniert, insbesondere miteinander verbunden werden. Bedarfsweise können die jeweils zueinander benachbarten Seiten der angrenzenden Verstärkungselemente formschlüssig und/oder kraftschlüssig miteinander verbunden werden. Besonders einfach und zweckmäßig ist es jedoch alternativ oder zusätzlich, wenn jeweils zueinander benachbarte Verstärkungselemente an den einander zugewandten Seiten gelenkig mit einander verbunden werden. Im Falle einer gelenkigen Verbindung ist es beispielsweise möglich, ein Verstärkungselement an den Gründungspfahl anzulegen und ein weiteres Verstärkungselement um das entsprechende Gelenk so zu schwenken, dass auch das weitere Verstärkungselement an den Gründungspfahl angelegt wird. Dabei bietet es sich besonders an, wenn die gelenkige Verbindung bzw. die Schwenkverbindung eine Schwenkachse definiert, die wenigstens überwiegend oder wenigstens im Wesentlichen parallel zur Längsachse des Gründungspfahls ausgerichtet ist. Die Verstärkungselemente bleiben also auch beim Schwenken gegeneinander bedarfsweise wenigstens im Wesentlichen in einer gemeinsamen Ebene senkrecht zur Längserstreckung des Gründungspfahls. Auf diese Weise wird einfach ermöglicht, die Verstärkungselemente um mehr als 180° um den Gründungspfahl herumzulegen und dies bereits vor dem Einbringen der Verstärkungselemente in den Meeresboden zu bewerkstelligen. Dies kann nämlich das Einbringen der Verstärkungselemente in den Meeresboden vereinfachen. Sind die Verstärkungselemente bereits vor dem Einbringen in den Meeresboden fest miteinander verbunden, sei es formschlüssig, gelenkig und/oder kraftschlüssig, kann vermieden werden, dass die Verbindung der Verstärkungselemente untereinander beim Einbringen in den Meeresgrund oder durch das Einbringen in den Meeresgrund versehentlich nicht wie gewünscht verbunden werden können.

Zudem wird der Verstärkungsabschnitt des Gründungspfahls oberhalb des Meeresbodens mit der Manschette der Gründungsverstärkung verbunden. Dabei wird eine bevorzugte Lastableitung erreicht, wenn die Manschette in einem Bereich oberhalb des Meeresbodens und bevorzugt zudem auch wenigstens teilweise oberhalb des Kragens angeordnet ist.

Der besseren Verständlichkeit halber und zur Vermeidung unnötiger Wiederholungen werden nachfolgend das Monopilefundament, die Monopilefundament-Installation und das Verfahren gemeinsam beschrieben, ohne immer jeweils im Einzelnen zwischen dem Monopilefundament, der Monopilefundament-Installation und dem Verfahren zu unterscheiden. Für den Fachmann ergibt sich jedoch anhand des Kontextes, welche Merkmale jeweils in Bezug auf das Monopilefundament, die Monopilefundament-Installation und das Verfahren besonders bevorzugt sind.

Bei einer ersten besonders bevorzugten Ausgestaltung des Monopilefundaments weist die Manschette und/oder der Kragen einen kreisförmigen oder ovalen Querschnitt auf. Ein kreisförmiger Querschnitt ermöglicht ein sehr gleichmäßiges Ableiten von Kräften vom Gründungspfahl über die Gründungsverstärkung an den Meeresboden. In einigen Fällen wird es jedoch eine dominierende Welle oder Windrichtung geben, so dass die in den Gründungspfahl eingeleiteten Kräfte eine Vorzugsrichtung aufweisen. Dann kann der Einsatz einer Manschette und/oder eines Kragens mit einem ovalen Querschnitt zweckmäßig sein. Dies gilt insbesondere dann, wenn die größere Längenerstreckung des ovalen Querschnitts in der Vorzugsrichtung der in den Gründungspfahl eingeleiteten Kräfte weist. Dabei ist der Querschnitt vorliegend vorzugsweise wenigstens im Wesentlichen in der Horizontalen angeordnet.

In Richtung wenigstens im Wesentlichen der Vertikalen kann die Manschette und/oder der Kragen alternativ oder zusätzlich ringförmig, zylindrisch oder konisch ausgebildet sein. Auf diese Weise wird eine sehr steife Gründungsverstärkung erhalten werden, die zudem für die Ableitung der Kräfte an den Meeresboden besonders geeignet ist. Welche Form von Manschette und/oder Kragen dabei zu bevorzugen sein wird, ist abhängig von der Art und der Richtung der abzuleitenden Kräfte, von der Art des vom Gründungspfahl getragenen Offshore-Bauwerks und gegebenenfalls von den Fertigungs- und Transportanforderungen.

Um eine zweckmäßige Verstärkung des Gründungspfahls zu erreichen, können die Gründungsverstärkung, die Verstärkungselemente, die Manschette und/oder der Kragen den Gründungspfahl umfangsseitig über einen Winkelbereich von wenigstens 60°, vorzugsweise von wenigstens 120°, weiter vorzugsweise von wenigstens 180°, insbesondere von wenigstens 260°, umgreifen. Ein Umgreifen des Gründungspfahls in einem geringeren Winkelbereich kann ausreichen, wenn der Gründungspfahl lediglich in bestimmte Richtungen gestützt werden muss. Je größer der entsprechende Winkelbereich ist, um so umfangreicher und in umso mehr Richtungen kann der Gründungspfahl gestützt werden. Dabei kann ein größerer Winkelbereich je nach dem jeweiligen Meeresboden das Einbringen in den Meeresboden in einem vorbestimmten Umfang erschweren oder gar verhindern.

Ein sehr stabiles Monopilefundament zur gleichmäßigen Ableitung von Kräften kann erhalten werden, wenn die Manschette, der Kragen und/oder der Gründungspfahl wenigstens im Wesentlichen konzentrisch zueinander ausgebildet sind. Zudem kann ein stabiler und einfach zu gründender Gründungspfahl erhalten werden, wenn dieser als Hohlprofil ausgebildet ist. Der Einfachheit halber und zur besseren Kraftableitung kann das entsprechende Hohlprofil zylindrisch oder konisch ausgebildet sein, je nach dem jeweiligen Aufstellort und/oder je nach dem jeweiligen, vom Gründungspfahl getragenen Offshore-Bauwerk.

Um den modularen Aufbau ebenso zu vereinfachen wie das Einbringen der Verstärkungselemente nacheinander in den Meeresboden, weist jedes der Verstärkungselemente ein Manschettenelement der Manschette, ein Kragenelement des Kragens und wenigstens ein Stützelement der Stütze auf.

So kann die Gründungsverstärkung beispielsweise auch durch gleichartige Verstärkungselemente gebildet werden. Die Verwendung von Gleichteilen ist nicht nur einfacher, sondern fertigungstechnisch auch kostengünstiger.

Zudem kann die Montage der Gründungsverstärkung vereinfacht werden, wenn die in Umfangsrichtung jeweils zueinander benachbarten Seiten der Manschettenelemente, Kragenelemente und/oder Stützenelemente untereinander zum formschlüssigen, gelenkigen und/oder kraftschlüssigen Verbinden ausgebildet sind. Dies führt auch zu einer Verringerung des Fertigungsaufwands der Gründungsverstärkung insgesamt.

Um eine zuverlässige Abstützung des Gründungspfahls an der Gründungsverstärkung zu erreichen, welche die Übertragung hoher Kräfte erlaubt, kann eine Groutverbindung vorgesehen werden. Zu diesem Zweck kann zwischen der Manschette, insbesondere zwischen den Manschettenelementen, und der Außenseite des Verstärkungsabschnitts des Gründungspfahls ein Spalt vorgesehen sein, der dann mit einer Vergussmasse ausgegossen werden kann. Hierzu bietet sich insbesondere ein sogenanntes Grout an, bei dem es sich um einen Spezialbeton, bzw. Zementleim oder Zementmörtel zum Füllen von Spalten handelt, insbesondere zum Verbinden von konzentrischen, über einen Spalt voneinander beabstandeten Stahlrohren einer Windkraftanlage. Es sind Grouts mit unterschiedlichen Zusammensetzungen am Markt bekannt. Vergussmassen können auch Vergussmörtel sein. Bei einem Grout handelt es sich beispielsweise um einen hochfesten Vergussbeton, der in unterschiedlichen Zusammensetzungen bekannt ist. Da bei Offshore-Windkraftanlagen, wenn auch an anderer Stelle, insbesondere in der Verbindung zwischen dem Gründungspfahl und dem Turm der Windkraftanlage oberhalb des Wasserspiegels, Groutverbindungen bekannt sind, werden die vorliegenden Verbindungen auch als Groutverbindungen bezeichnet, obwohl grundsätzlich auch andere Vergussmassen zur Bildung der Verbindung als ein Grout in Frage kommen können, beispielsweise Stahlfaserbeton oder zementfreie Bentonitsuspensionen.

Insbesondere um einen radial geschlossenen Spalt zu erhalten, der mit einer Vergussmasse, insbesondere einem Grout, gefüllt werden kann, bietet es sich an, wenn wenigstens zwei benachbarte Manschettenelemente benachbarter Verstärkungselemente in Umfangrichtung zum abschnittsweisen Überlappen ausgebildet sind.

Eine stabile und zudem steife Ausgestaltung der Gründungsverstärkung kann erhalten werden, wenn die wenigstens eine Stütze, insbesondere das wenigstens eine Stützenelement, in Form einer Rippe oder Strebe ausgebildet ist. Auf diese Art lassen sich auch besonders zuverlässig Kräfte in radialer Richtung ableiten, und zwar insbesondere dann, wenn die Rippe oder Strebe sich in radialer Richtung erstreckt. Dabei können die jeweils angrenzende Stützenelemente benachbarter Verstärkungselemente auch zum formschlüssigen, gelenkigen und/oder kraftschlüssigen Ineinandergreifen ausgebildet sein, so dass eine einfache Verbindung der benachbarten Verstärkungselemente untereinander erreicht werden kann. Das formschlüssige Ineinandergreifen der Stützenelemente wird besonders einfach und zuverlässig dadurch erreicht, dass ein Stützelement wenigstens einen Hakenabschnitt aufweist und dass das zugeordnete Stützelement des benachbarten Verstärkungselements wenigstens einen Eingreifabschnitt aufweist, der in den Hakenabschnitt des angrenzenden Stützelements eingreift.

Für den Fall, dass der Gründungspfahl eine Durchführungsöffnung oder mehrere Durchführungsöffnungen aufweist, etwa um durch die Durchführungsöffnung eine Leitung und/oder ein Kabel von außen in den Gründungspfahl zu führen, bietet es sich an, wenn die angrenzenden Manschettenelemente wenigstens im Bereich von wenigstens einer Durchführungsöffnung im Gründungspfahl voneinander beabstandet angeordnet sind. So wird vermieden, dass es zu einer Beschädigung der wenigstens einen Leitung und/oder des wenigstens einen Kabels durch die Gründungsverstärkung kommt. Dies bedeutet nicht, dass die angrenzenden Manschettenelemente sich nicht abschnittswese berühren können und auch nicht, dass die angrenzenden Manschettenelemente nicht miteinander verbunden sein können. Dies sollte dann aber an anderen Bereichen der Fall sein als im Bereich der wenigstens einen Durchführungsöffnung. Alternativ oder zusätzlich kann an den Stellen, an denen Kabel zum Gründungspfahl geführt werden, auch jeweils eine Aussparung im Kragen vorgesehen sein. Es sind aber auch Ausgestaltungen denkbar, bei denen die angrenzenden Verstärkungselemente, Manschettenelemente, Kragenelemente und/oder Stützelemente untereinander unverbunden sind. Möglich ist auch, in den entsprechenden Bereichen der Durchführung auf ein Grout und/oder Vergussmasse zwischen der Manschette und dem Gründungspfahl zu verzichten. Beispielweise um ein Wegspülen von Meeresboden im Bereich des Monopilefundaments zu vermeiden, kann die Stütze als eine den radialen Spalt zwischen der Manschette und dem Kragen wenigstens im Wesentlichen verschließende Ringscheibe ausgebildet sein. Ein Austrag von Sediment aus dem inneren Bereich des Kragens oder das Bilden von einem Kolk kann so verhindert werden. Für eine einfache modulare Ausgestaltung der Gründungsverstärkung können die Stützenelemente als Ringscheibenelemente der Ringscheibe ausgebbildet sein. Für eine Zusätzliche Aussteifung der Gründungsverstärkung kann alternativ oder zusätzlich auch der Raum zwischen dem Kragen und dem Gründungspfahl unterhalb der Ringscheibe wenigstens im Wesentlichen mit einer Vergussmasse, insbesondere mit Grout, ausgefüllt sein.

Um ein einfaches und kostengünstiges Ausgießen von Freiräumen mit Grout oder einer anderen Vergussmasse zu erreichen, kann die Manschette, insbesondere wenigstens ein Manschettenelement, und/oder die Stütze, insbesondere ein Stützenelement, wenigstens einen Groutanschluss zum Verbinden mit einer Groutleitung und Zuführen von Grout oder einer anderen Vergussmasse aufweisen. Die Lage des Groutanschlusses kann danach gewählt werden, welcher Freiraum mit einer Vergussmasse, insbesondere einem Grout, ausgefüllt werden soll.

Um ein einfaches und kostengünstiges Ausgießen von Freiräumen mit einer Vergussmasse, insbesondere einem Grout, zu erreichen, kann alternativ oder zusätzlich der Gründungspfahl im Inneren eine Groutleitung aufweisen. Dies gilt insbesondere dann, wenn die Groutleitung mit dem wenigstens einen Groutanschluss verbunden ist.

Bei einer ersten besonders bevorzugten Ausgestaltung der Monopilefundament-Installation weist jedes Verstärkungselement ein Manschettenelement der Manschette, ein Kragenelement des Kragens und wenigstens ein Stützenelement der Stütze auf. So kann einfach und kostengünstig ein modularer Aufbau der Gründungsverstärkung erreicht werden. Bedarfsweise lässt sich sogar der Aufbau der Gründungsverstärkung durch kostengünstig zu fertigende Gleichteile realisieren. Dabei können die in Umfangsrichtung jeweils zueinander benachbarten Seiten der Manschettenelemente, Kragenelemente und/oder Stützenelemente untereinander formschlüssig, gelenkig und/oder kraftschlüssig verbunden sein, um eine einfache Montage der Gründungsverstärkung zu erreichen und die hohe Stabilität und Steifigkeit der Gründungsverstärkung bereitzustellen.

Eine besonders umfangreiche und zuverlässige Verstärkung des Gründungspfahls lässt sich realisieren, wenn die Manschette, insbesondere die Manschettenelemente, über eine Groutverbindung mit der Außenseite des Verstärkungsabschnitts des Gründungspfahls verbunden ist. So wird ein unerwünschtes Spiel vermieden und die Installation vereinfacht. Alternativ oder zusätzlich können wenigstens zwei benachbarte Manschettenelemente benachbarter Verstärkungselemente in Umfangrichtung abschnittsweise überlappend angeordnet sein. Dies kann der Aussteifung der Gründungsverstärkung ebenso dienen, wie das Ausgießen des Spalts zwischen der Manschette und dem Gründungspfahl mit einer Vergussmasse, insbesondere einem Grout. Für das Ausgießen des Spalts zwischen der Manschette und dem Gründungspfahl mit einer Vergussmasse, insbesondere einem Grout, bietet es sich grundsätzlich auch an, wenn die Manschettenelemente eine in radialer Richtung geschlossene Manschette ausbildet.

Auch ist es zur vereinfachten Installation und der Aussteifung der Gründungsverstärkung dienlich, wenn angrenzende Stützenelemente benachbarter Verstärkungselemente, insbesondere über einen Hakenabschnitt, jeweils formschlüssig, gelenkig und/oder kraftschlüssig ineinandergreifen. Alternativ oder zusätzlich kann der Raum zwischen dem Kragen, dem Gründungspfahl und dem Meeresboden unterhalb der Ringscheibe wenigstens im Wesentlichen mit einer Vergussmasse, insbesondere einem Grout, ausgefüllt werden, so dass die Gründungsverstärkung weiter ausgesteift wird und/oder größere Kräfte von dem Gründungspfahl in den Meeresboden ableiten kann.

Um ein schnelles und einfaches Zuführen und Ausgießen mit einer Vergussmasse, insbesondere einem Grout, zu ermöglichen, kann die Manschette, insbesondere wenigstens ein Manschettenelement, und/oder die Stütze, insbesondere ein Stützenelement, wenigstens einen Groutanschluss aufweisen, der mit einer, vorzugsweise im Inneren des Gründungspfahls verlaufenden, Groutleitung und Zuführen von einer Vergussmasse, insbesondere einem Grout, verbunden sein kann.

Bei einer ersten besonders bevorzugten Ausgestaltung des Verfahrens ist vorgesehen, dass in Umfangsrichtung jeweils zueinander benachbarten Seiten der Manschettenelemente, Kragenelemente und/oder Stützenelemente untereinander, vorzugsweise durch das wenigstens teilweise Einbringen in den Meeresboden oder vor dem wenigstens teilweisen Einbringen in den Meeresboden, formschlüssig, gelenkig und/oder kraftschlüssig verbunden werden, so lassen sich besonders zweckmäßig die jeweiligen Verstärkungselemente verbinden. Die wenigstens zwei benachbarten Manschettenelemente benachbarter Verstärkungselemente können dabei in Umfangrichtung, insbesondere zur Bildung einer in radialer Richtung geschlossenen Manschette, abschnittsweise überlappend positioniert werden. Dies begünstigt die Anbindung an den Gründungspfahl und damit das Abstützen des Gründungspfahls.

Wenn die Manschette, insbesondere die Manschettenelemente, mit der über einen Spalt beabstandeten Außenseite des Verstärkungsabschnitts des Gründungspfahls über eine in den Spalt eingebrachte Vergussmasse, insbesondere Grout, verbunden wird, kann eine langlebige Verbindung erreicht und können große Kräfte abgeleitet werden. Alternativ oder zusätzlich können die angrenzenden Manschettenelemente im Bereich von wenigstens einer Durchführungsöffnung im Gründungspfahl voneinander beabstandet angeordnet werden. So wird ein einfaches und beschädigungsfreies Durchführen etwa von Seekabeln in den Gründungspfahl hinein bzw. hinaus sichergestellt. Unabhängig davon können angrenzende Stützenelemente benachbarter Verstärkungselemente, insbesondere über wenigstens einen Hakenabschnitt und wenigstens einen Eingreifabschnitt, jeweils formschlüssig ineinander gefügt werden, um ein einfaches und zudem funktionales Fügen zu ermöglichen.

Vorzugsweise ist der Raum zwischen dem Kragen und dem Gründungspfahl unterhalb der Ringscheibe wenigstens im Wesentlichen mit einer Vergussmasse, insbesondere einem Grout, ausgefüllt wird, um die Gründungsverstärkung weiter aussteifen und/oder größere Kräfte von dem Gründungspfahl in den Meeresboden ableiten zu können.

Alternativ oder zusätzlich kann eine Vergussmasse, insbesondere ein Grout, über einen Groutanschluss in der Manschette, insbesondere in wenigstens einem Manschettenelement, und/oder in der Stütze, insbesondere in wenigstens einem Stützenelement, zugeführt werden. So kann der entsprechende Freiraum sehr einfach, zuverlässig und schnell ausgegossen werden. Dies ist insbesondere dann der Fall, wenn die Vergussmasse, insbesondere das Grout, über eine Groutleitung zugeführt wird. Diese kann außerhalb des Gründungspfahls verlaufen. Bevorzugt kann es jedoch sein, wenn die Groutleitung im Inneren des Gründungspfahls verläuft. Dies vereinfacht den Anschluss der Groutleitung und schützt diese vor äußerer Beschädigung.

Nachfolgend wird die Erfindung anhand einer lediglich Ausführungsbeispiele darstellenden Zeichnung näher erläutert. In der Zeichnung zeigt
- Fig. 1: eine Offshore-Windkraftanlage mit einem ersten erfindungsgemäßen Monopilefundament und einer ersten erfindungsgemäßen Monopilefundament-Installation in einer schematischen Seitenansicht,
- Fig. 2: ein Detail der Offshore-Windkraftanalage im Bereich der Monopilefundament-Installation in einer perspektivischen Ansicht,
- Fig. 3: eine schematische Darstellung des Verfahrens zur Herstellung des Monopilefundaments und der Monopilefundament-Installation aus Fig. 1 in einer schematischen Darstellung,
- Fig. 4: ein Detail der Monopilefundament-Installation in einer Draufsicht,
- Fig. 5: das Detail der Offshore-Windkraftanalage aus Fig. 1 in einer horizontalen Schnittansicht,
- Fig. 6A-B: ein Detail eines zweiten erfindungsgemäßen Monopilefundaments und einer zweiten erfindungsgemäßen Monopilefundament-Installation in einer zusammengebauten Stellung und in einer Stellung während der Herstellung jeweils in einer perspektivischen Ansicht,
- Fig. 7: ein Detail eines dritten erfindungsgemäßen Monopilefundaments und einer dritten erfindungsgemäßen Monopilefundament-Installation in einer perspektivischen Ansicht,
- Fig. 8: ein Detail eines vierten erfindungsgemäßen Monopilefundaments und einer vierten erfindungsgemäßen Monopilefundament-Installation in einer perspektivischen Ansicht und
- Fig. 9: ein Detail eines fünften erfindungsgemäßen Monopilefundaments und einer fünften erfindungsgemäßen Monopilefundament-Installation in einer perspektivischen Ansicht.

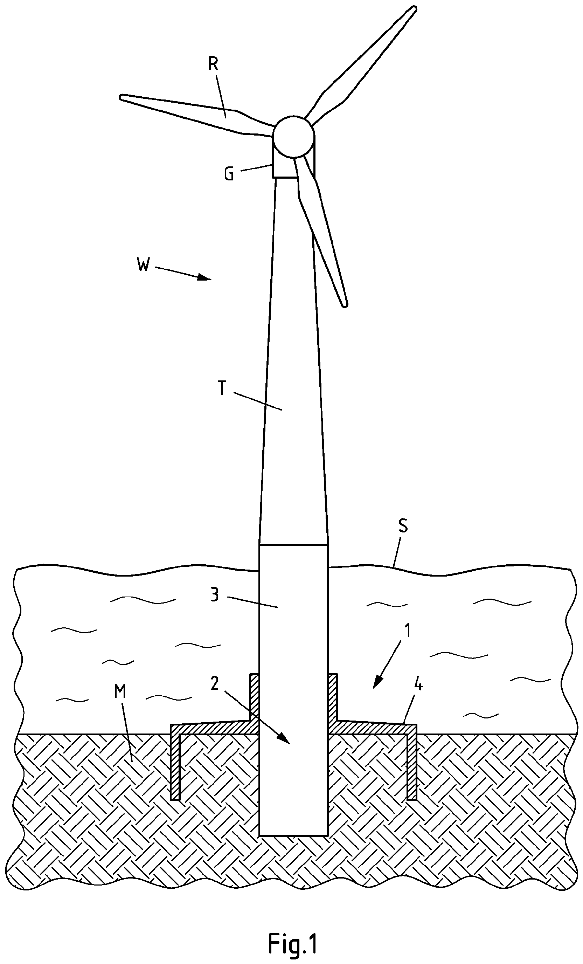

In der Fig. 1 ist eine Offshore-Windkraftanlage W dargestellt, die eine Monopilefundament-Installation 1 mit einem Monopilefundament 2 umfasst. Die Monopilefundament-Installation 1 umfasst einen Gründungspfahl 3 und eine Gründungsverstärkung 4. Sowohl der Gründungpfahl 3 als auch die Gründungsverstärkung 4 sind teilweise in den Meeresboden M eingelassen. Dabei wird der Gründungpfahl 3 durch ein unten offenes Stahlrohr gebildet, das sich bis über den Meeresspiegel S nach oben erstreckt. Der dargestellte und insoweit bevorzugte Gründungspfahl 3 umfasst dabei einen Gründungsabschnitt GA zum Einbringen in den Meeresboden und einen Verstärkungsabschnitt VA zum Verstärken des Gründungspfahls 3 durch die Gründungsverstärkung 4. Auf das obere Ende des Gründungspfahls 3 ist die Turmstruktur T der Windkraftanlage W aufgesetzt, welche die Gondel G und den Rotor R trägt.

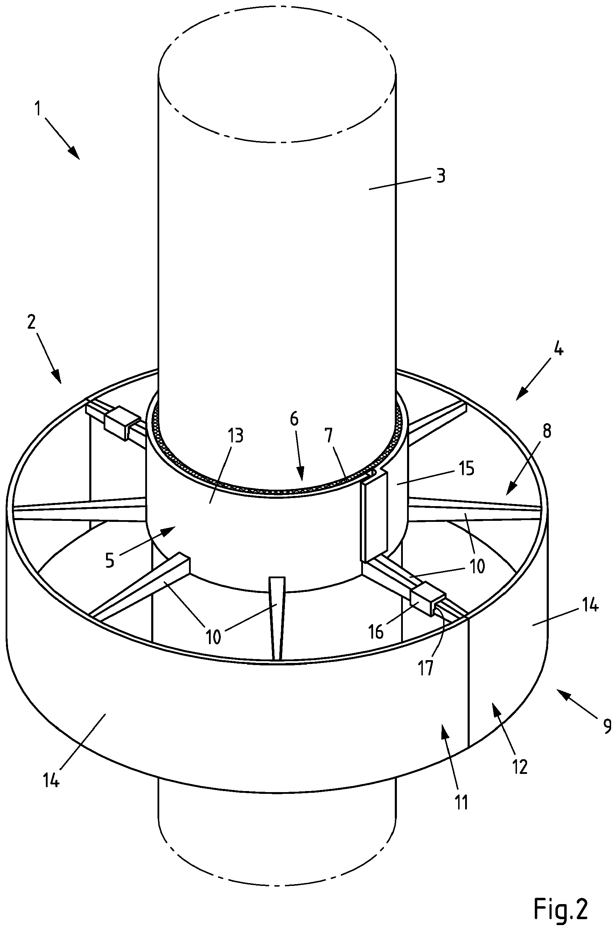

In der Fig. 2 ist die Monopilefundament-Installation 1 im Detail dargestellt. Die Gründungsverstärkung 4 ist außen angrenzend zum Gründungspfahl 3 sowie umlaufend um den Gründungspfahl 3 vorgesehen. Der Gründungspfahl 3 wird von einer Manschette 5 der Gründungsverstärkung umgriffen, wobei bei der dargestellten und insoweit bevorzugten Monopilefundament-Installation 1 der Ringspalt 6 zwischen der Manschette 5 und der Gründungspfahl 3 durch eine Vergussmasse 7, insbesondere in Form eines Grouts bzw. Spezialbetons, ausgefüllt ist, um eine bündige und feste Anbindung der Gründungsverstärkung 4 an den Gründungspfahl 3 zu gewährleisten. Die Manschette 5 ist über eine Stütze 8 mit dem Kragen 9 der Gründungsverstärkung 4 verbunden. Dabei wird die Stütze 8 durch eine Reihe von der Manschette 5 ausgehenden und sternförmig radial nach außen weisenden Stützenelementen 10 gebildet, die mit ihren äußeren Enden an dem Kragen 9 angreifen. Der Kragen 9 ist bei der dargestellten und insoweit bevorzugten Monopilefundament-Installation 1 als wenigstens im Wesentlichen zylinderförmiger Stahlmantel ausgebildet, der mit seinem unteren Ende in den Meeresboden M getrieben worden ist. Der besseren Anschaulichkeit halber ist der Meeresboden M in der Fig. 2 weggelassen worden. Der Kragen 9 kann aber wenigstens im Wesentlichen bis zum oberen Rand in den Meeresboden M eingelassen sein. Der Kragen 9 kann bedarfsweise aber auch mit einem oberen Abschnitt über den Meeresboden M hinausragen.

Kräfte, die seitlich auf die Windkraftanlage W einwirken, werden teilweise direkt über den Gründungspfahl 3 in den Meeresboden M abgeleitet und teilweise über die Vergussmasse 7 oder Groutverbindung GV an die Manschette 5 übertragen, von wo die Kräfte dann über die Stützenelemente 10 radial nach außen geleitet und an dem umlaufenden Kragen 9 abgeleitet werden. Der Kragen 9 stützt sich dabei am Meeresboden M ab und stützt so die gesamte Windkraftanlage W, auch wenn der Gründungspfahl 3 nicht so weit in den Meeresboden M getrieben werden kann. In solchen Fällen oder in Fällen, in denen der Gründungspfahl 3 sich mit der Zeit lockert, kommt die Gründungsverstärkung 4 bevorzugt zum Einsatz. Die Gründungsverstärkung 4 ist nämlich zweiteilig aufgebaut, so dass Gründungsverstärkung 4 am Gründungspfahl 3 nachträglich installiert werden kann.

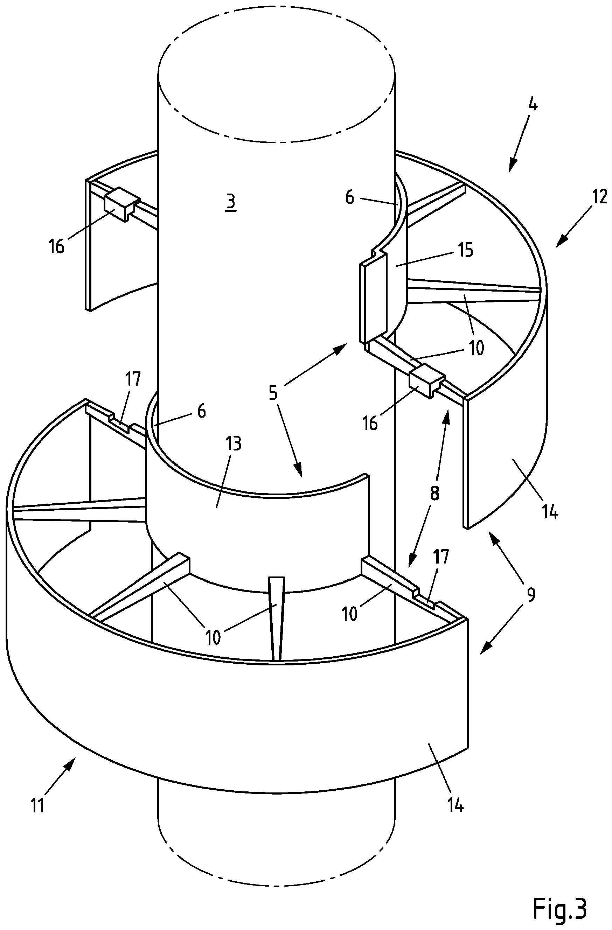

Die Installation erfolgt dann, wie dies in der Fig. 3 schematisch dargestellt ist. Die dargestellte und insoweit bevorzugte Gründungsverstärkung 4 ist dazu aus zwei separaten Verstärkungselementen 11,12 gebildet. Ein erstes Verstärkungselement 11 wird zunächst mit einem Manschettenelement 13 an den Gründungspfahl 3 herangeführt und dann nach unten in den Meeresboden M eingeführt. Dies erfolgt vorzugsweise durch ein Vibrationsverfahren. Bedarfsweise kann das Verstärkungselement 11 so weit in den Meeresboden M eingebracht werden, dass das zugehörige Kragenelement 14 wenigstens im Wesentlichen über seine ganze Höhe im Meeresboden M angeordnet ist. Die Stützenelemente 10 sind dann aber bevorzugt noch über dem Meeresboden M angeordnet. Als nächster Schritt wird das zweite Verstärkungselement 12 an den Gründungspfahl 3 herangeführt und sodann abgesenkt. Das zweite Verbindungselement 12 wird dann wenigstens im Wesentlichen ebenso weit in den Meeresboden M eingetrieben, wie das erste Verstärkungselement 11. Dabei sind die seitlichen Ränder der Manschettenelemente 13,15 so ausgebildet, dass die Ränder einander seitlich überlappen und auf diese Weise eine umlaufend geschlossene Manschette 5 bilden. Der Ringspalt 6 zwischen der Manschette 5 und dem Gründungspfahl 3 kann so ohne Weiteres mit einer Vergussmasse 7 ausgegossen werden. Die Vergussmasse 7 wird dabei vorzugsweise durch einen Spezialbeton bzw. ein Grout oder eine andere Vergussmasse 7 gebildet.

Des Weiteren werden die Verstärkungselemente 11,12 über die Stützenelemente 10 formschlüssig miteinander verbunden. Dazu ist bei der dargestellten und insoweit bevorzugten Gründungsverstärkung 4 von den benachbarten Stützenelementen 10 jeweils ein Stützenelement 10 mit einem Hakenabschnitt 16 und das jeweils andere Stützenelement 10 mit einem Eingreifabschnitt 17 versehen, in den der korrespondierende Hackenabschnitt 16 formschlüssig eingreifen kann, wenn das zweite Verstärkungselement 12 in der richtigen Ausrichtung in den Meeresboden M eingeführt wird.

Alternativ oder zusätzlich könnten die Verstärkungselemente aber auch gelenkig über eine Schwenkverbindung bzw. ein Gelenk verbunden werden. Dies erfolgt dann insbesondere vor dem Einbringen der Verstärkungselemente in den Meeresboden. Es kann so erst ein Verstärkungselement seitlich an den Gründungspfahl angelegt werden. Dann kann ein weiteres, gelenkig mit dem ersten Verstärkungselement verbundenes Verstärkungselement um eine Schwenkachse geschwenkt werden, die sich wenigstens im Wesentlichen parallel zur Längsachse des Gründungspfahls erstreckt. Auf diese Weise kann der Gründungspfahl umfangsseitig bedarfsweise wenigstens im Wesentlichen vollständig von wenigstens zwei Verstärkungselementen umgriffen werden. Wenn der Gründungspfahl von wenigstens zwei Verstärkungselementen vollständig umgriffen werden, können zwei Verstärkungselemente an angrenzenden Seiten, die vorzugsweise nicht auch durch eine gelenkige Verbindung verbunden sind, kraftschlüssig und/oder formschlüssig verbunden sein, um die Gründungsverstärkung umlaufend zu schließen. Als kraftschlüssige und/oder formschlüssige Verbindung kommt dabei insbesondere eine ein Hakenelement umfassende Verbindung in Frage. Zwingend ist dies jedoch nicht.

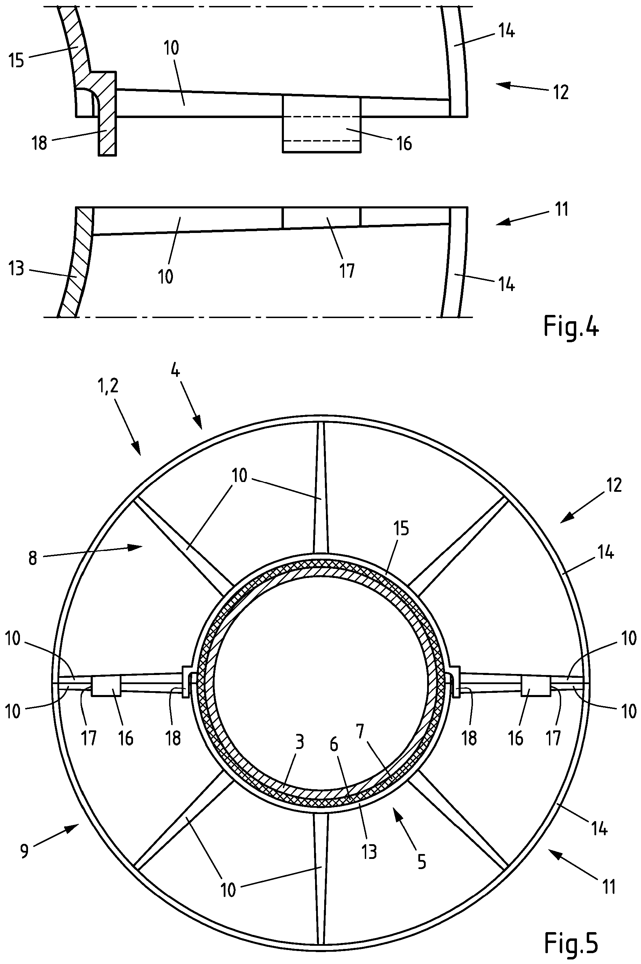

In der Fig. 4 ist ein Detail eines Verbindungsbereichs zwischen den beiden Verstärkungselementen 11,12 vor dem eigentlichen Fügen dargestellt. Die Manschette 5 des oben dargestellten Verstärkungselements 12 weist eine Lasche 18 auf, die das Manschettenelement 13 des unteren Verstärkungselements 11 außen überlappt. Zudem weist das Stützelement 10 des oberen Verstärkungselements 12 einen Hakenabschnitt 16 auf, der teilweise das Stützelement 10 des unteren Verstärkungselements 11 formschlüssig umgreift, und zwar im Bereich des Eingreifabschnitts 17. Der Formschluss wirkt dabei in der Umfangsrichtung, in radialer Richtung und auch nach unten.

In der Fig. 5 ist die Monopilefundament-Installation 1 aus der Fig. 1 in einer horizontalen Schnittansicht von oben dargestellt. Bei dem dargestellten und insoweit bevorzugten Monopilefundament 2 sind die beiden Verstärkungselemente 11,12 der Gründungsverstärkung 4 jeweils wenigstens im Wesentlichen halbkreisförmig ausgebildet und jeweils wenigstens im Wesentlichen spiegelsymmetrisch ausgebildet. Beides ist jedoch nicht zwingen erforderlich. Die beiden Verstärkungselemente 11,12 sind an den einander angrenzenden Seiten jeweils über die im Zusammengang mit der Fig. 4 im Einzelnen beschriebene, formschlüssige Verbindungen der angrenzenden Stützenelemente 10 umfassend die Hakenabschnitte 16 miteinander verbunden. Der nach der Installation der Verstärkungselemente 11,12 im Meeresboden und nach dem Verbinden der Verstärkungselemente 11,12 untereinander in den beiden Verbindungsbereichen gebildete der Ringspalt 6 zwischen dem Gründungspfahl 3 und der aus den beiden Manschettenelementen 13,15 und der zugehörigen Laschen 18 gebildeten Manschette 5 wird durch eine Vergussmasse 7, insbesondere in Form eines Grout, zur Bildung einer Groutverbindung GV ausgegossen.

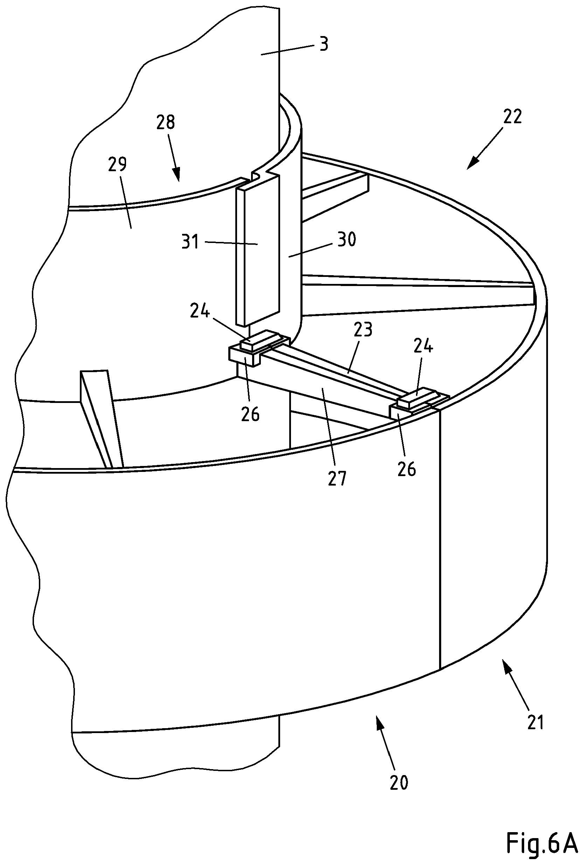

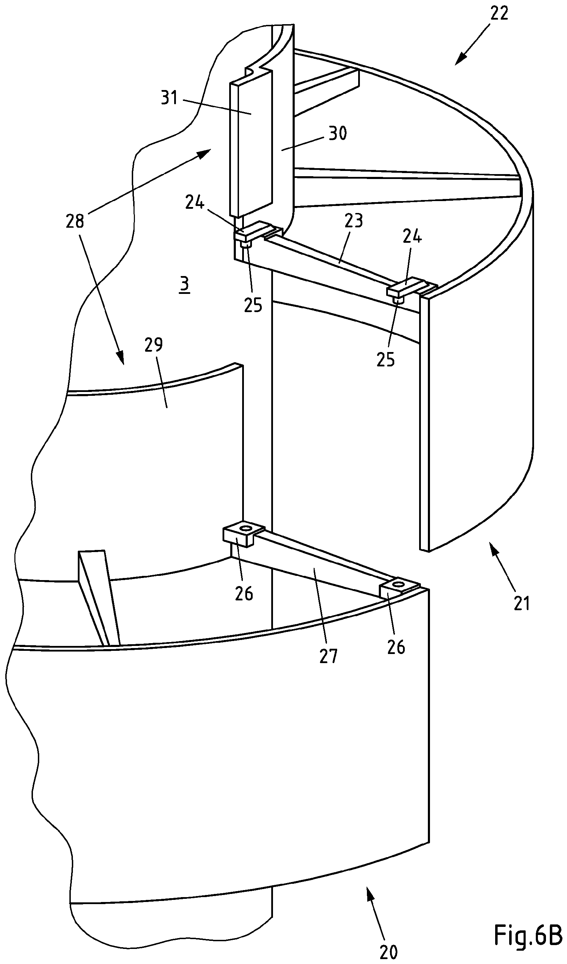

In den Fig. 6A-B ist eine alternative Verbindung zwischen zwei angrenzenden Verstärkungselementen 20,21 einer alternativen Gründungsverstärkung 22 dargestellt, und zwar einmal im zusammengebauten und einmal im noch nicht zusammengebauten Zustand. Hier sind an einem Stützelement 23 zwei Hakenabschnitte 24 vorgesehen, die jeweils einen nach unten weisenden Stiftabschnitt 25 umfassen, die in korrespondierende Eingreifabschnitte 26 des angrenzenden Stützelements 27 eingreifen. Die beiden Hakenabschnitte 24 und die Eingreifabschnitte 26 sind dabei jeweils an den einander in der radialen Richtung gegenüberliegenden Enden der Stützenelemente 23,27 vorgesehen. Angrenzend zu den inneren Enden der entsprechenden Stützenelemente 23,27 ist eine Manschette 28 mit in einem Randbereich überlappenden Manschettenelementen29,30 vorgesehen, wobei ein Manschettenelement 29 durch das angrenzende Manschettenelement 30 seitlich in der Umfangsrichtung mittels einer entsprechenden Lasche 31 außen überlappt wird.

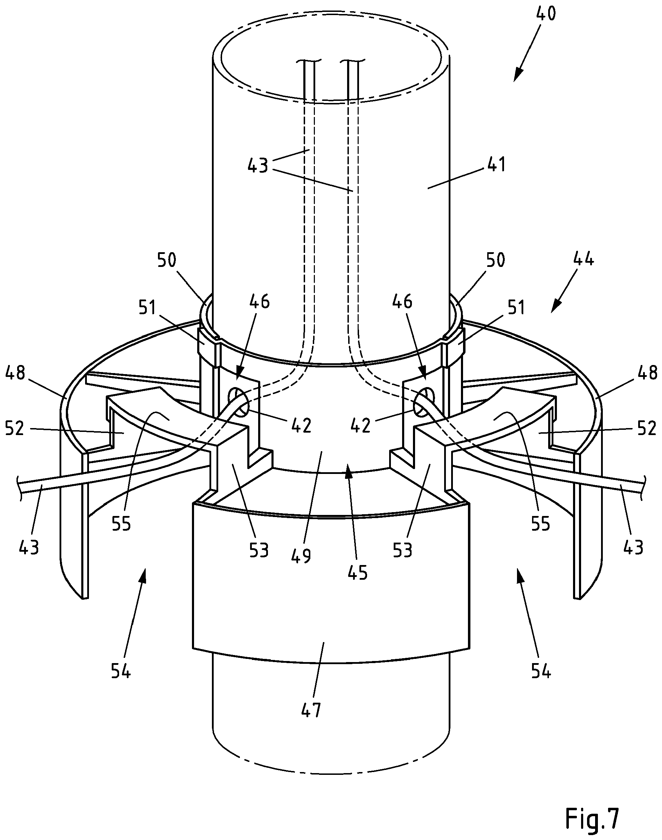

In der Fig. 7 ist eine Monopilefundament-Installation 40 dargestellt, bei der der Gründungspfahl 41 zwei Durchführungsöffnungen 42 aufweist, durch die das Stromkabel 43 in den Gründungspfahl 41 ein und auch wieder austritt. Damit im Bereich der Durchführungsöffnungen 42 das Stromkabel 43 nicht durch die Gründungsverstärkung 44 beschädigt wird, ist in den Bereichen der Durchführungsöffnungen 42 die Manschette 45 in angrenzenden Bereichen 46 teilweise ausgespart. Dabei stoßen zudem in den Bereichen der Durchführungsöffnungen 42 Verstärkungselemente 47,48 aneinander. Oberhalb der Durchführungsöffnungen 42 überlappen die angrenzenden Manschettenelemente 49,50 einander, und zwar mit Hilfe entsprechend ausgebildeter Laschen 51. Die Stützenelemente 52,53 in diesem Verbindungsbereich 54 sind dabei über eine Art Brücke 55 formschlüssig miteinander verbunden, die darunter ausreichend Platz für das Stromkabel 43 lässt, so dass das Stromkabel 43 beim Installieren der Gründungsverstärkung 44 nicht gequetscht werden kann.

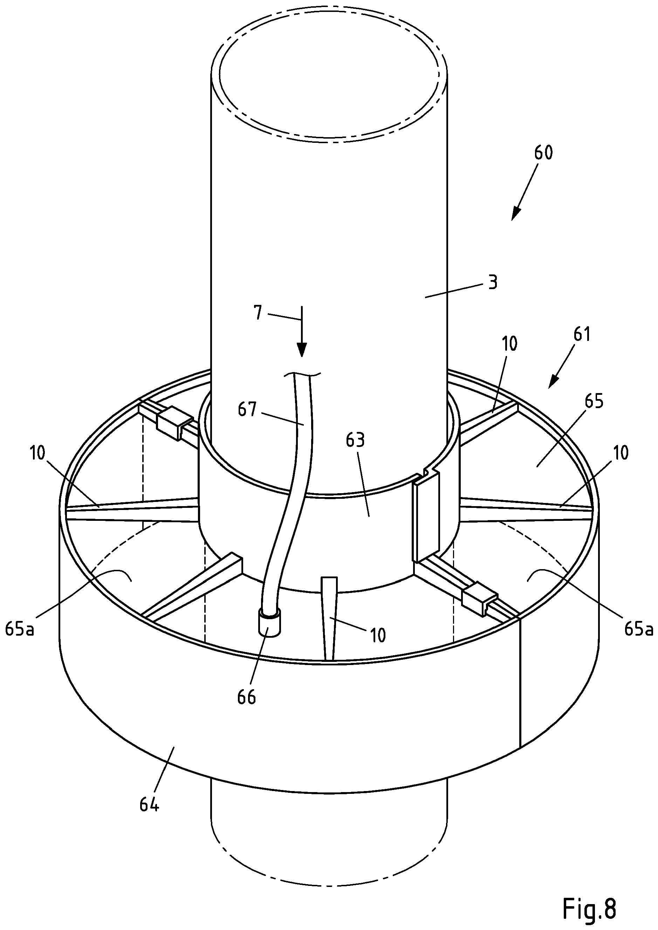

In der Fig. 8 ist eine Monopilefundament-Installation 60 dargestellt, die prinzipiell der Monopilefundament-Installation 2 der Fig. 2 entspricht. Allerdings ist bei der Gründungsverstärkung 61 der Fig. 7 der Spalt 62 zwischen der Manschette 63 und dem Kragen 64 wenigstens im Wesentlichen durch eine sich wenigstens im Wesentlichen radial nach außen erstreckende zweiteilig aus Ringscheibenelementen 65a gebildete Ringscheibe 65 verschlossen, die zusätzlich zu den Stützenelementen 10 vorgesehen ist. Es kann so nicht zu einem Ausspülen von Meeresboden aus dem Bereich zwischen dem Gründungspfahl 3 und dem Kragen 64 kommen. Zudem kann bei der dargestellten Gründungsverstärkung 61 an einen Anschluss 66 an der Ringscheibe 65 eine Leitung 67 zum Zuführen von Vergussmasse 7 oder Grout angeschlossen werden. Dadurch kann bedarfsweise der Raum unterhalb der Ringscheibe 65, zwischen dem Gründungspfahl 3 und dem Kragen 64 sowie oberhalb des Meeresbodens M mit der entsprechenden Vergussmasse 7 ausgefüllt werden.

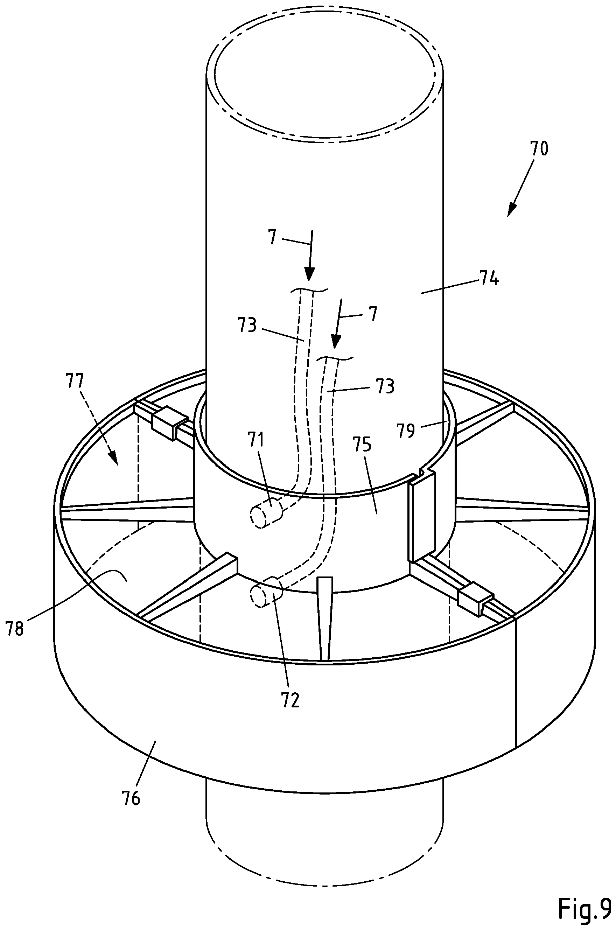

Bei der in der Fig. 9 dargestellten Monopilefundament-Installation 70 sind zwei Anschlüsse 71,72 jeweils für eine Vergussmasse 7 führende Leitung 73 in dem Gründungspfahl 74 vorgesehen. Ein Anschluss 71 ist dabei auf der Höhe der Manschette 75 und ein Anschluss 72 auf der Höhe des Kragens 76 vorgesehen. Der obere Anschluss 71 dient dem Ausgießen des Ringspalts 79 zwischen dem Gründungspfahl 3 und der Manschette 75 mit Vergussmasse 7, während der untere Anschluss 72 dem Ausgießen des Freiraums 77 unterhalb der Ringscheibe 78 mit Vergussmasse 7 dient. Dabei kann bedarfsweise auch auf einen Anschluss 71,72 verzichtet werden, und zwar für den Fall, dass nicht der Freiraum 77 und der Ringspalt 79 ausgegossen werden sollen, oder für den Fall, dass der Freiraum 77 und der Ringspalt 79 gemeinsam aus einer Leitung 73 und über einen gemeinsamen Anschluss 71,72 ausgegossen werden sollen.

### Bezugszeichenliste

- 1: Monopilefundament-Installation
- 2: Monopilefundament
- 3: Gründungspfahl
- 4: Gründungsverstärkung
- 5: Manschette
- 6: Ringspalt
- 7: Vergussmasse
- 8: Stütze
- 9: Kragen
- 10: Stützenelement
- 11,12: Verstärkungselement
- 13: Manschettenelement
- 14: Kragenelement
- 15: Manschettenelement
- 16: Hakenabschnitt
- 17: Eingreifabschnitt
- 18: Lasche
- 20,21: Verstärkungselement
- 22: Gründungsverstärkung
- 23: Stützelement
- 24: Hakenabschnitt
- 25: Stiftabschnitt
- 26: Eingreifabschnitt
- 27: Stützelement
- 29,30: Manschettenelement
- 31: Lasche
- 40: Monopilefundament-Installation
- 41: Gründungspfahl
- 42: Durchführungsöffnungen
- 43: Stromkabel
- 44: Gründungsverstärkung
- 45: Manschette
- 46: Bereich
- 47,48: Verstärkungselement
- 49,50: Manschettenelement
- 51: Lasche
- 52,53: Stützenelement
- 54: Verbindungsbereich
- 55: Brücke
- 60: Monopilefundament-Installation
- 61: Gründungsverstärkung
- 62: Spalt
- 63: Manschette
- 64: Kragen
- 65: Ringscheibe
- 65a: Ringscheibenelement
- 66: Anschluss
- 67: Leitung
- 70: Monopilefundament-Installation
- 71,72: Anschluss
- 73: Leitung
- 74: Gründungspfahl
- 75: Manschette
- 76: Kragen
- 77: Freiraum
- 78: Ringscheibe
- 79: Ringspalt
- G: Gondel
- GA: Gründungsabschnitt
- GV: Groutverbindung
- M: Meeresboden
- R: Rotor
- S: Meeresspiegel
- T: Turmstruktur
- VA: Verstärkungsabschnitt
- W: Windkraftanlage

## Patentansprüche

1. Monopilefundament (2) für ein Offshore-Bauwerk, insbesondere für eine Windkraftanlage (W), mit einem Gründungspfahl (3,41,74) zum Tragen des Bauwerks und einer sich außerhalb an den Gründungspfahl (3,41,74) anschließenden Gründungsverstärkung (4,22,44,61), wobei die Gründungsverstärkung (4,22,44,61) eine Manschette (5,45,63,75), einen Kragen (9,64,76) und wenigstens eine Stütze (8) aufweist, wobei die Manschette (5,45,63,75) dem Gründungspfahl (3,41,74) zugeordnet und der Kragen (9,64,76) über die wenigstens eine Stütze (8) nach außen von der Manschette (5,45,63,75) beabstandet gehalten ist, wobei der Gründungspfahl (3,41,74) einen Gründungsabschnitt (GA) zum Einbringen in den Meeresboden (M) und einen Verstärkungsabschnitt (VA) zum Verbinden des Gründungspfahls (3,41,74) mit der Manschette (5,45,63,75) oberhalb des Meeresbodens (M) aufweist wobei der Kragen (9,64,76) zum wenigstens teilweisen Einbringen in den Meeresboden (M) ausgebildet ist, wobei die Gründungsverstärkung (4,22,44,61) in Umfangsrichtung des Gründungspfahls (3,41,74) mehrere, insbesondere zwei, drei oder vier, nebeneinander anzuordnende Verstärkungselemente (11,12,20,21,47,48) aufweist und wobei die in Umfangsrichtung jeweils zueinander benachbarten Seiten der Verstärkungselemente (11,12,20,21,47,48) zum formschlüssigen, gelenkigen und/oder kraftschlüssigen Verbinden untereinander ausgebildet sind,
**dadurch gekennzeichnet, dass**
jedes Verstärkungselement (11,12,20,21,47,48) ein Manschettenelement (13,15,29,30,49,50) der Manschette (5,45,63,75), ein Kragenelement (14) des Kragens (9,64,76) und wenigstens ein Stützenelement (10,52,53) der Stütze (8) aufweist.

2. Monopilefundament nach Anspruch 1,
**dadurch gekennzeichnet, dass**
die Manschette (5,45,63,75) und/oder der Kragen (9,64,76) einen kreisförmigen oder ovalen Querschnitt aufweist und/oder
dass die Manschette (5,45,63,75) und/oder der Kragen (9,64,76) ringförmig, zylindrisch oder konisch ausgebildet ist und/oder
dass die Gründungsverstärkung (4,22,44,61), die Verstärkungselemente (11,12,20,21,47,48), die Manschette (5,45,63,75) und/oder der Kragen (9,64,76) den Gründungspfahl (3,41,74) umfangsseitig über einen Winkelbereich von wenigstens 60°, vorzugsweise von wenigstens 120°, weiter vorzugsweise von wenigstens 180°, insbesondere von wenigstens 260°, umgreifen.

3. Monopilefundament nach Anspruch 1 oder 2,
**dadurch gekennzeichnet, dass**
die Manschette (5,45,63,75), der Kragen (9,64,76) und/oder der Gründungspfahl (3,41,74) wenigstens im Wesentlichen konzentrisch zueinander ausgebildet sind und/oder dass der Gründungspfahl (3,41,74) als, insbesondere zylindrisches oder konisches, Hohlprofil ausgebildet ist und/oder
dass die in Umfangsrichtung jeweils zueinander benachbarten Seiten der Manschettenelemente (13,15,29,30,49,50), Kragenelemente (14) und/oder Stützenelemente (10,52,53) untereinander zum formschlüssigen, gelenkigen und/oder kraftschlüssigen Verbinden ausgebildet sind.

4. Monopilefundament nach einem der Ansprüche 1 bis 3,
**dadurch gekennzeichnet, dass**
die Manschette (5,45,63,75), insbesondere die Manschettenelemente (13,15,29,30,49,50), zum Verbinden mit der Außenseite des Verstärkungsabschnitts (VA) des Gründungspfahls (3,41,74) über eine in einem Spalt (6,62,79) zwischen der Manschette (5,45,63,75), insbesondere den Manschettenelementen (13,15,29,30,49,50), und der Außenseite des Verstärkungsabschnitts (VA) vorgesehenen Groutverbindung (GV) ausgebildet ist und/oder dass wenigstens zwei benachbarte Manschettenelemente (13,15,29,30,49,50) benachbarter Verstärkungselemente (11,12,20,21,47,48) in Umfangrichtung zum abschnittsweisen Überlappen ausgebildet sind und/oder dass die Manschettenelemente (13,15,29,30,49,50) zur Bildung einer in radialer Richtung geschlossenen Manschette (4,45,63,75) ausgebildet sind.

5. Monopilefundament nach einem der Ansprüche 1 bis 4,
**dadurch gekennzeichnet, dass**
die wenigstens eine Stütze (8), insbesondere das wenigstens eine Stützenelement (10,52,53), in Form einer Rippe oder Strebe ausgebildet ist und dass, vorzugsweise, angrenzende Stützenelemente (10,52,53) benachbarter Verstärkungselemente (11,12,20,21,47,48) jeweils zum formschlüssigen, gelenkigen und/oder kraftschlüssigen Ineinandergreifen ausgebildet sind und dass, weiter vorzugsweise, ein Stützelement (10,52,53) der angrenzenden Stützenelemente (10,52,53) wenigstens einen Hakenabschnitt (16,24) und das jeweils andere Stützelement (10,52,53) wenigstens einen zum Eingreifen in den wenigstens einen Hakenabschnitt (16,24) ausgebildeten Eingreifabschnitt (17,26) aufweist.

6. Monopilefundament nach einem der Ansprüche 3 bis 5,
**dadurch gekennzeichnet, dass**
die angrenzenden Manschettenelemente (49,50) im Bereich von wenigstens einer Durchführungsöffnung (42) im Gründungspfahl (41) voneinander beabstandet sind.

7. Monopilefundament nach einem der Ansprüche 1 bis 6,
**dadurch gekennzeichnet, dass**
die Stütze (8) als eine den radialen Spalt (62,79) zwischen der Manschette (63,75) und dem Kragen (9,64,76) wenigstens im Wesentlichen verschließende Ringscheibe (65,78) ausgebildet ist und dass, vorzugsweise, die Stützenelemente (10,52,53) als Ringscheibenelemente (65a) der Ringscheibe (65,78) ausgebildet sind und/oder der Raum zwischen dem Kragen (9,64,76) und dem Gründungspfahl (74) unterhalb der Ringscheibe (65,78) wenigstens im Wesentlichen mit einer Vergussmasse (7), insbesondere Grout, ausgefüllt ist.

8. Monopilefundament nach einem der Ansprüche 1 bis 7,
**dadurch gekennzeichnet, dass**
die Manschette, insbesondere wenigstens ein Manschettenelement, und/oder die Stütze (8), insbesondere ein Stützenelement, wenigstens einen Groutanschluss (66) zum Verbinden mit einer Groutleitung (67) und Zuführen einer Vergussmasse (7), insbesondere von Grout, aufweist und/oder
dass der Gründungspfahl (74) im Inneren eine Groutleitung (73) aufweist und, vorzugsweise, die Groutleitung (73) mit einem Groutanschluss (71,72) verbunden ist.

9. Monopilefundament-Installation für ein Offshore-Bauwerk, insbesondere für eine Windkraftanlage, mit einem in einem Meeresboden (M) verankerten Monopilefundament nach einem der Ansprüche 1 bis 8, wobei der Gründungspfahl (3,41,74) mit seinem Gründungsabschnitt (GA) in den Meeresboden (M) eingebracht ist, wobei der Kragen (9,64,76) wenigstens teilweise, insbesondere vollständig, in den Meeresboden (M) eingebracht ist, wobei die Gründungsverstärkung (4,22,44,61) in Umfangsrichtung des Gründungspfahls (3,41,74) mehrere, insbesondere zwei, drei oder vier, nebeneinander angeordnete Verstärkungselemente (11,12,20,21,47,48) aufweist und wobei die in Umfangsrichtung jeweils zueinander benachbarten Seiten der Verstärkungselemente (11,12,20,21,47,48) formschlüssig, gelenkig und/oder kraftschlüssig untereinander verbunden sind.

10. Monopilefundament-Installation nach Anspruch 9,
**dadurch gekennzeichnet, dass**
jedes Verstärkungselement (11,12,20,21,47,48) ein Manschettenelement (13,15,29,30,49,50) der Manschette (5,45,63,75), ein Kragenelement (14) des Kragens (9,64,76) und wenigstens ein Stützenelement (10,52,53) der Stütze (8) aufweist und dass, vorzugsweise, die in Umfangsrichtung jeweils zueinander benachbarten Seiten der Manschettenelemente (13,15,29,30,49,50), Kragenelemente (14) und/oder Stützenelemente (10,52,53) untereinander formschlüssig, gelenkig und/oder kraftschlüssig verbunden sind.

11. Monopilefundament-Installation nach Anspruch 9 oder 10,
**dadurch gekennzeichnet, dass**
die Manschette (5,45,63,75), insbesondere die Manschettenelemente (13,15,29,30,49,50), über eine Groutverbindung (GV) mit der Außenseite des Verstärkungsabschnitts (VA) des Gründungspfahls (3,41,74) verbunden ist und/oder
dass wenigstens zwei benachbarte Manschettenelemente (13,15,29,30,49,50) benachbarter Verstärkungselemente (11,12,20,21,47,48) in Umfangrichtung abschnittsweise überlappend angeordnet sind und/oder dass die Manschettenelemente (13,15,29,30,49,50) eine in radialer Richtung geschlossene Manschette (5,45,63,75) ausgebildet und/oder
dass angrenzende Stützenelemente (10,52,53) benachbarter Verstärkungselemente (11,12,20,21,47,48), insbesondere über einen Hakenabschnitt (16,24), jeweils formschlüssig ineinandergreifen und/oder dass der Raum zwischen dem Kragen (9,64,76), dem Gründungspfahl (3,41,74) und dem Meeresboden (M) unterhalb der Ringscheibe (65,78) wenigstens im Wesentlichen mit einer Vergussmasse (7), insbesondere Grout, ausgefüllt ist.

12. Monopilefundament-Installation nach einem der Ansprüche 9 bis 11,
**dadurch gekennzeichnet, dass**
die Manschette, insbesondere wenigstens ein Manschettenelement, und/oder die Stütze (8), insbesondere ein Stützenelement, wenigstens einen Groutanschluss (66) aufweisen und dass der Groutanschluss (66) mit einer, vorzugsweise im Inneren des Gründungspfahls (3) verlaufenden, Groutleitung (67) zum Zuführen von einer Vergussmasse (7), insbesondere von Grout, verbunden ist.

13. Verfahren zum Errichten einer Monopilefundament-Installation nach einem der Ansprüche 9-12 mit einem Monopilefundament nach einem der Ansprüche 1 bis 8,
- bei dem der Gründungspfahl (3,41,74) mit dem Gründungsabschnitt (GA), vorzugsweise über Vibration und/oder Impulsrammung, in den Meeresboden (M) eingebracht wird,
- bei dem anschließend in Umfangsrichtung des Gründungspfahls (3,41,74) die Kragen (9,64,76) mehrerer, insbesondere von zwei, drei oder vier, Verstärkungselemente (11,12,20,21,47,48), vorzugsweise über Vibration, wenigstens teilweise in den Meeresboden (M) eingebracht werden,
- bei dem die Verstärkungselemente (11,12,20,21,47,48) durch das wenigstens teilweise Einbringen in den Meeresboden (M), insbesondere nacheinander, oder vor dem wenigstens teilweisen Einbringen in den Meeresboden (M) nebeneinander positioniert werden,
- bei dem die jeweils zueinander benachbarten Seiten der angrenzenden Verstärkungselemente (11,12,20,21,47,48), vorzugsweise durch das wenigstens teilweise Einbringen in den Meeresboden (M) oder vor dem wenigstens teilweisen Einbringen in den Meeresboden (M), formschlüssig, gelenkig und/oder kraftschlüssig miteinander verbunden werden und
- bei dem der Verstärkungsabschnitt (VA) des Gründungspfahls (3,41,74) oberhalb des Meeresbodens (M) mit der Manschette (5,45,63,75)der Gründungsverstärkung (4,22,44,61) verbunden wird.

14. Verfahren nach Anspruch 13,
- bei dem in Umfangsrichtung jeweils zueinander benachbarten Seiten der Manschettenelemente (13,15,29,30,49,50), Kragenelemente (14) und/oder Stützenelemente (10,52,53) untereinander, vorzugsweise durch das wenigstens teilweise Einbringen in den Meeresboden (M) oder vor dem wenigstens teilweisen Einbringen in den Meeresboden (M), formschlüssig, gelenkig und/oder kraftschlüssig verbunden werden und
- bei dem wenigstens zwei benachbarte Manschettenelemente (13,15,29,30,49,50) benachbarter Verstärkungselemente (11,12,20,21,47,48) in Umfangrichtung, insbesondere zur Bildung einer in radialer Richtung geschlossenen Manschette (5,45,63,75), abschnittsweise überlappend positioniert werden.

15. Verfahren nach Anspruch 13 oder 14,
- bei dem die Manschette (5,45,63,75), insbesondere die Manschettenelemente (13,15,29,30,49,50), mit der über einen Spalt (6,62,79) beabstandeten Außenseite des Verstärkungsabschnitts (VA) des Gründungspfahls (3,41,74) über eine in den Spalt (6,62,79) eingebrachte Vergussmasse (7), insbesondere Grout, verbunden wird und/oder
- bei dem Vergussmasse (7), insbesondere Grout, vorzugsweise über eine, insbesondere im Inneren des Gründungspfahls (3, 74) verlaufende, Groutleitung (67,73) und über einen Groutanschluss (66,71,72) in der Manschette (5,45,63,75), insbesondere in wenigstens einem Manschettenelement (49,50), und/oder in der Stütze (8), insbesondere in wenigstens einem Stützenelement (10,52,53), zugeführt wird.

## Claims

1. Monopile foundation (2) for an offshore structure, in particular for a wind turbine (W), with a foundation pile (3, 41, 74) for supporting the structure and a foundation reinforcement (4, 22, 44, 61) adjoining the foundation pile (3, 41, 74) on the outside, wherein the foundation reinforcement (4, 22, 44, 61) has a sleeve (5, 45, 63, 75), a collar (9, 64, 76) and at least one support (8), wherein the sleeve (5, 45, 63, 75) is assigned to the foundation pile (3, 41, 74) and the collar (9, 64, 76) is held spaced apart outwards from the sleeve (5, 45, 63, 75) via the at least one support (8), wherein the foundation pile (3, 41, 74) has a foundation section (GA) for being introduced into the seabed (M) and a reinforcement section (VA) for connecting the foundation pile (3, 41, 74) to the sleeve (5, 45, 63, 75) above the seabed (M), wherein the collar (9, 64, 76) is designed to be at least partially introduced into the seabed (M), wherein the foundation reinforcement (4, 22, 44, 61) has a plurality of, in particular two, three or four, reinforcement elements (11, 12, 20, 21, 47, 48) to be arranged next to one another in the circumferential direction of the foundation pile (3, 41, 74) and wherein the sides of the reinforcement elements (11, 12, 20, 21, 47, 48) adjacent to one another in the circumferential direction are designed to be connected to one another in a positive-locking, articulated and/or force-fitting manner, **characterised in that** each reinforcement element (11, 12, 20, 21, 47, 48) has a sleeve element (13, 15, 29, 30, 49, 50) of the sleeve (5, 45, 63, 75), a collar element (14) of the collar (9, 64, 76) and at least one support element (10, 52, 53) of the support (8).

2. Monopile foundation according to claim 1,
**characterised in that** the sleeve (5, 45, 63, 75) and/or the collar (9, 64, 76) has a circular or oval cross-section and/or **in that** the sleeve (5, 45, 63, 75) and/or the collar (9, 64, 76) is designed circularly, cylindrically or conically and/or **in that** the foundation reinforcement (4, 22, 44, 61), the reinforcement elements (11, 12, 20, 21, 47, 48), the sleeve (5, 45, 63, 75) and/or the collar (9, 64, 76) enclose the foundation pile (3, 41, 74) circumferentially over an angular range of at least 60°, preferably of at least 120°, further preferably of at least 180°, in particular of at least 260°.

3. Monopile foundation according to claim 1 or 2,
**characterised in that** the sleeve (5, 45, 63, 75), the collar (9, 64, 76) and/or the foundation pile (3, 41, 74) are designed at least substantially concentrically to one another and/or **in that** the foundation pile (3, 41, 74) is designed as an, in particular cylindrical or conical, hollow profile and/or **in that** the sides of the sleeve elements (13, 15, 29, 30, 49, 50), collar elements (14) and/or support elements (10, 52, 53) each adjacent to one another in the circumferential direction are designed to connect to one another in a positive-locking, articulated and/or force-fitting manner.

4. Monopile foundation according to any one of claims 1 to 3,
**characterised in that** the sleeve (5, 45, 63, 75), in particular the sleeve elements (13, 15, 29, 30, 49, 50), are designed to connect to the outer side of the reinforcement section (VA) of the foundation pile (3, 41, 74) via a grout connection (GV) provided in a gap (6, 62, 79) between the sleeve (5, 45, 63, 75), in particular the sleeve elements (13, 15, 29, 30, 49, 50), and the outer side of the reinforcement section (VA) and/or **in that** at least two adjacent sleeve elements (13, 15, 29, 30, 49, 50) of adjacent reinforcement elements (11, 12, 20, 21, 47, 48) are designed to overlap in sections in the circumferential direction and/or **in that** the sleeve elements (13, 15, 29, 30, 49, 50) are designed to form a sleeve (4, 45, 63, 75) closed in a radial direction.

5. Monopile foundation according to any one of claims 1 to 4,
**characterised in that** the at least one support (8), in particular the at least one support element (10, 52, 53), is designed in the form of a rib or strut and **in that**, preferably, adjoining support elements (10, 52, 53) of adjacent reinforcement elements (11, 12, 20, 21, 47, 48) are each designed for engaging into one another in a positive-locking, articulated and/or force-fitting manner and **in that**, further preferably, a support element (10, 52, 53) of the adjoining support elements (10, 52, 53) has at least one hook section (16, 24) and the respectively other support element (10, 52, 53) has at least one engagement section (17, 26) designed to engage into the at least one hook section (16, 24).

6. Monopile foundation according to any one of claims 3 to 5,
**characterised in that** the adjoining sleeve elements (49, 50) are spaced apart from one another in the region of at least one opening (42) in the foundation pile (41).

7. Monopile foundation according to any one of claims 1 to 6,
**characterised in that** the support (8) is designed as an annular disc (65, 78) at least substantially closing the radial gap (62, 79) between the sleeve (63, 75) and the collar (9, 64, 76) and **in that**, preferably, the support elements (10, 52, 53) are designed as annular disc elements (65a) of the annular disc (65, 78) and/or the space between the collar (9, 64, 76) and the foundation pile (74) below the annular disc (65, 78) is filled at least substantially with a casting compound (7), in particular grout.

8. Monopile foundation according to any one of claims 1 to 7,
**characterised in that** the sleeve, in particular at least one sleeve element, and/or the support (8), in particular a support element, has at least one grout connection (66) for connecting to a grout line (67) and supplying a casting compound (7), in particular of grout, and/or **in that** the foundation pile (74) has a grout line (73) in the interior and, preferably, the grout line (73) is connected to a grout connection (71, 72).

9. Monopile foundation installation for an offshore structure, in particular for a wind turbine, with a monopile foundation according to any one of claims 1 to 8 anchored in a seabed (M), wherein the foundation pile (3, 41, 74) is introduced into the seabed (M) with its foundation section (GA), wherein the collar (9, 64, 76) is introduced at least partially, in particular completely, into the seabed (M), wherein the foundation reinforcement (4, 22, 44, 61) has a plurality of, in particular two, three or four, reinforcement elements (11, 12, 20, 21, 47, 48) arranged next to one another in the circumferential direction of the foundation pile (3, 41, 74) and wherein the sides of the reinforcement elements (11, 12, 20, 21, 47, 48) adjacent to one another in the circumferential direction are connected to one another in a positive-locking, articulated and/or force-fitting manner.

10. Monopile foundation installation according to claim 9,
**characterised in that** each reinforcement element (11, 12, 20, 21, 47, 48) has a sleeve element (13, 15, 29, 30, 49, 50) of the sleeve (5, 45, 63, 75), a collar element (14) of the collar (9, 64, 76) and at least one support element (10, 52, 53) of the support (8) and **in that**, preferably, the sides of the sleeve elements (13, 15, 29, 30, 49, 50), collar elements (14) and/or support elements (10, 52, 53) each adjacent to one another in the circumferential direction are connected to one another in a positive-locking, articulated and/or force-fitting manner.

11. Monopile foundation installation according to claim 9 or 10,
**characterised in that** the sleeve (5, 45, 63, 75), in particular the sleeve elements (13, 15, 29, 30, 49, 50), is connected to the outer side of the reinforcement section (VA) of the foundation pile (3, 41, 74) via a grout connection (GV) and/or in that at least two adjacent sleeve elements (13, 15, 29, 30, 49, 50) of adjacent reinforcement elements (11, 12, 20, 21, 47, 48) are arranged overlapping in sections in the circumferential direction and/or **in that** the sleeve elements (13, 15, 29, 30, 49, 50) form a sleeve (5, 45, 63, 75) closed in the radial direction and/or **in that** adjoining support elements (10, 52, 53) of adjacent reinforcement elements (11, 12, 20, 21, 47, 48) each engage into one another, in particular via a hook section (16, 24), in a positive-locking manner and/or **in that** the space between the collar (9, 64, 76), the foundation pile (3, 41, 74) and the seabed (M) below the annular disc (65, 78) is filled at least substantially with a casting compound (7), in particular grout.

12. Monopile foundation installation according to any one of claims 9 to 11,
**characterised in that** the sleeve, in particular at least one sleeve element, and/or the support (8), in particular a support element, have at least one grout connection (66) and **in that** the grout connection (66) is connected to a grout line (67), preferably running in the interior of the foundation pile (3), for supplying a casting compound (7), in particular grout.

13. Method for erecting a monopile foundation installation according to any one of claims 9 to 12, with a monopile foundation according to any one of claims 1 to 8,
- in which the foundation pile (3, 41, 74) is introduced with the foundation section (GA), preferably via vibration and/or pulse ramming, into the seabed (M),
- in which, in the circumferential direction of the foundation pile (3, 41, 74), the collars (9, 64, 76) of a plurality of, in particular of two, three or four, reinforcement elements (11, 12, 20, 21, 47, 48) are then introduced at least partially into the seabed (M), preferably via vibration,
- in which the reinforcement elements (11, 12, 20, 21, 47, 48) are positioned next to one another through the at least partial introduction into the seabed (M), in particular successively, or before the at least partial introduction in the seabed (M),
- in which the sides of the adjoining reinforcement elements (11, 12, 20, 21, 47, 48) each adjacent to one another are connected to one another, preferably through the at least partial introduction into the seabed (M) or before the at least partial introduction into the seabed (M), in a positive-locking, articulated and/or force-fitting manner and
- in which the reinforcement section (VA) of the foundation pile (3, 41, 74) is connected to the sleeve (5, 45, 63, 75) of the foundation reinforcement (4, 22, 44, 61) above the seabed (M).

14. Method according to claim 13,
- in which the sides of the sleeve elements (13, 15, 29, 30, 49, 50), collar elements (14) and/or support elements (10, 52, 53) each adjacent to one another in the circumferential direction are connected to one another, preferably through the at least partial introduction into the seabed (M) or before the at least partial introduction into the seabed (M), in a positive-locking, articulated and/or force-fitting manner and
- in which at least two adjacent sleeve elements (13, 15, 29, 30, 49, 50) of adjacent reinforcement elements (11, 12, 20, 21, 47, 48) are positioned overlapping in sections in the circumferential direction, in particular to form a sleeve (5, 45, 63, 75) closed in the radial direction.

15. Method according to claim 13 or 14,
- in which the sleeve (5, 45, 63, 75), in particular the sleeve elements (13, 15, 29, 30, 49, 50), is connected to the outer side of the reinforcement section (VA) of the foundation pile (3, 41, 74), which is spaced apart via a gap (6, 62, 79), via a casting compound (7), in particular grout, introduced into the gap (6, 62, 79) and/or
- in which casting compound (7), in particular grout, is supplied preferably via a grout line (67, 73) running in particular in the interior of the foundation pile (3, 74) and via a grout connection (66, 71, 72) in the sleeve (5, 45, 63, 75), in particular in at least one sleeve element (49, 50), and/or in the support (8) in particular in at least one support element (10, 52, 53).

## Revendications

1. Fondation pour pilier unique (2) pour une construction offshore, notamment pour une éolienne (W), présentant un pieu de fondation (3, 41, 74) pour supporter la construction et un renforcement de fondation (4, 22, 44, 61) se raccordant à l'extérieur au pieu de fondation (3, 41, 74), le renforcement de fondation (4, 22, 44, 61) présentant une manchette (5, 45, 63, 75), un col (9, 64, 76) et au moins un support (8), la manchette (5, 45, 63, 75) étant associée au pieu de fondation (3, 41, 74) et le col (9, 64, 76) étant maintenue via ledit au moins un support (8) à une certaine distance vers l'extérieur de la manchette (5, 45, 63, 75), le pieu de fondation (3, 41, 74) présentant une section de fondation (GA) destinée à être introduite dans le fond de la mer (M) et une section de renforcement (VA) pour relier le pieu de fondation (3, 41, 74) à la manchette (5, 45, 63, 75) au-dessus du fond de la mer (M), le col (9, 64, 76) étant conçue pour une introduction, au moins partielle, dans le fond de la mer (M), le renforcement de fondation (4, 22, 44, 61) présentant, dans la direction périphérique du pieu de fondation (3, 41, 74), plusieurs, notamment deux, trois ou quatre, éléments de renforcement (11, 12, 20, 21, 47, 48) à disposer les uns à côté des autres et les côtés adjacents les uns aux autres dans la direction périphérique des éléments de renforcement (11, 12, 20, 21, 47, 48) étant conçus pour une liaison par complémentarité de forme, articulée et/ou de force les uns avec les autres, **caractérisée en ce que** chaque élément de renforcement (11, 12, 20, 21, 47, 48) présente un élément de manchette (13, 15, 29, 30, 49, 50) de la manchette (5, 45, 63, 75), un élément de col (14) du col (9, 64, 76) et au moins un élément de support (10, 52, 53) du support (8).

2. Fondation pour pilier unique selon la revendication 1,
**caractérisée en ce que** la manchette (5, 45, 63, 75) et/ou le col (9, 64, 76) présentent une section transversale circulaire ou ovale et/ou **en ce que** la manchette (5, 45, 63, 75) et/ou le col (9, 64, 76) sont conçus de forme circulaire, cylindrique ou conique et/ou **en ce que** le renforcement de fondation (4, 22, 44, 61), les éléments de renforcement (11, 12, 20, 21, 47, 48), la manchette (5, 45, 63, 75) et/ou le col (9, 64, 76) entourent le pieu de fondation (3, 41, 74) sur sa périphérie sur une plage angulaire d'au moins 60°, de préférence d'au moins 120°, mieux encore d'au moins 180°, notamment d'au moins 260°.

3. Fondation pour pilier unique selon la revendication 1 ou 2,
**caractérisée en ce que** la manchette (5, 45, 63, 75), le col (9, 64, 76) et/ou le pieu de fondation (3, 41, 74) sont conçus au moins sensiblement concentriques les uns par rapport aux autres et/ou **en ce que** le pieu de fondation (3, 41, 74) est conçu comme profil creux, notamment cylindrique ou conique, et/ou **en ce que** les côtés adjacents les uns aux autres dans la direction périphérique des éléments de manchette (13, 15, 29, 30, 49, 50), des éléments de col (14) et/ou des éléments de support (10, 52, 53) sont conçus pour une liaison par complémentarité de forme, articulée et/ou de force les uns avec les autres.

4. Fondation pour pilier unique selon l'une des revendications 1 à 3,
**caractérisée en ce que** la manchette (5, 45, 63, 75), notamment les éléments de manchette (13, 15, 29, 30, 49, 50), est conçue pour une liaison avec le côté extérieur de la section de renforcement (VA) du pieu de fondation (3, 41, 74) par le biais d'une connexion à mastic (GV), prévu dans un interstice (6, 62, 79) entre la manchette (5, 45, 63, 75), notamment les éléments de manchette (13, 15, 29, 30, 49, 50) et le côté extérieur de la section de renforcement (VA) et/ou **en ce qu'**au moins deux éléments de manchette (13, 15, 29, 30, 49, 50) adjacents d'éléments de renforcement (11, 12, 20, 21, 47, 48) adjacents sont conçus en chevauchement par sections dans la direction périphérique et/ou **en ce que** les éléments de manchette (13, 15, 29, 30, 49, 50) sont conçus pour la formation d'une manchette (4, 45, 63, 75) fermée dans la direction radiale.

5. Fondation pour pilier unique selon l'une des revendications 1 à 4,
**caractérisée en ce qu'**au moins un support (8), notamment au moins un élément de support (10, 52, 53), est conçu sous la forme d'une nervure ou d'une entretoise et **en ce que**, de préférence, les éléments de support (10, 52, 53) adjacents d'éléments de renforcement (11, 12, 20, 21, 47, 48) adjacents sont conçus respectivement pour un engrènement par complémentarité de forme, articulée et/ou de force et, **en ce que**, mieux encore, un élément de support (10, 52, 53) des éléments de support (10, 52, 53) adjacents, présente au moins une section d'accrochage (16, 24) et respectivement l'autre élément de support (10, 52, 53) présente au moins une section d'engagement (17, 26) conçue pour l'engrènement dans au moins une section d'accrochage (16, 24).

6. Fondation pour pilier unique selon l'une des revendications 3 à 5,
**caractérisée en ce que** les éléments de manchette (49, 50) adjacents sont à une certaine distance les uns des autres dans la zone d'au moins un ouverture de passage (42) dans le pieu de fondation (41).

7. Fondation pour pilier unique selon l'une des revendications 1 à 6,
**caractérisée en ce que** le support (8) est conçu sous forme d'un disque annulaire (65, 78) fermant au moins sensiblement un interstice radial (62, 79) entre la manchette (63, 75) et le col (9, 64, 76), et, **en ce que**, de préférence, les éléments de support (10, 52, 53) sont conçus comme des éléments de disque annulaire (65a) du disque annulaire (65, 78) et/ou l'espace entre le col (9, 64, 76) et le pieu de fondation (74) en dessous du disque annulaire (65, 78) est au moins essentiellement rempli d'une masse de scellement (7), notamment du mastic.

8. Fondation pour pilier unique selon l'une des revendications 1 à 7,
**caractérisée en ce que** la manchette, notamment au moins un élément de manchette, et/ou le support (8), notamment un élément de support, présente au moins un raccordement à mastic (66) pour le raccordement à une conduite à mastic (67) et l'alimentation d'une masse de scellement (7), notamment de mastic, et/ou **en ce que** le pieu de fondation (74) présente à l'intérieur une conduite à mastic (73) et, de préférence, la conduite à mastic (73) est reliée à un raccordement à mastic (71, 72).

9. Installation de fondation de pilier unique pour une construction offshore, notamment pour une éolienne, avec une fondation de pilier unique selon l'une des revendications 1 à 8 ancrée dans un fond de la mer (M), le pieu de fondation (3, 41, 74) avec sa section de fondation (GA) étant introduit dans le fond de la mer (M), le col (9,64,76) étant, au moins partiellement, notamment complètement, introduite dans le fond de la mer (M), le renforcement de fondation (4, 22, 44, 61) présentant, dans la direction périphérique du pieu de fondation (3, 41, 74), plusieurs, notamment deux, trois ou quatre, éléments de renforcement (11, 12, 20, 21, 47, 48) agencés adjacents, et les côtés, respectivement adjacents dans la direction périphérique, des éléments de renforcement (11, 12, 20, 21, 47, 48), étant reliés par complémentarité de forme, articulée, et/ou de force les uns aux autres.

10. Installation de fondation de pilier unique selon la revendication 9,
**caractérisée en ce que** chaque élément de renforcement (11, 12, 20, 21, 47, 48) présente un élément de manchette (13, 15, 29, 30, 49, 50) de la manchette (5, 45, 63, 75), un élément de col (14) du col (9, 64, 76) et au moins un élément de support (10, 52, 53) du support (8) et **en ce que**, de préférence, les côtés, respectivement adjacents les uns aux autres dans la direction périphérique des éléments de manchette (13, 15, 29, 30, 49, 50), des éléments de col (14) et/ou des éléments de support (10, 52, 53) sont reliés par complémentarité de forme, articulée, et/ou de force les uns aux autres.

11. Installation de fondation de pilier unique selon la revendication 9 ou 10,
**caractérisée en ce que** la manchette (5, 45, 63, 75), notamment les éléments de manchette (13, 15, 29, 30, 49, 50), est reliée, par le biais d'une connexion à mastic (GV), avec le côté extérieur de la section de renforcement (VA) du pieu de fondation (3, 41, 74) et/ou **en ce qu'**au moins deux éléments du manchette (13, 15, 29, 30, 49, 50) adjacents des éléments de renforcement (11, 12, 20, 21, 47, 48) adjacents sont agencés en chevauchement, par sections, dans la direction périphérique et/ou **en ce que** les éléments de manchette (13, 15, 29, 30, 49, 50) forment une manchette (5, 45, 63, 75) fermée dans la direction radiale et/ou **en ce que** les éléments de support (10, 52, 53) adjacents des éléments de renforcement (11, 12, 20, 21, 47, 48) adjacents s'engagent les uns dans les autres notamment par le biais d'une section d'accrochage (16, 24) et/ou **en ce que** l'espace entre le col (9, 64, 76), le pieu de fondation (3, 41, 74) et le fond de la mer (M) en dessous du disque annulaire (65, 78) est rempli au moins sensiblement d'une masse de scellement (7), notamment du mastic.

12. Installation de fondation de pilier unique selon l'une des revendications 9 à 11, **caractérisée en ce que** la manchette, notamment au moins un élément de manchette, et/ou le support (8), notamment un élément de support, présentent au moins un raccordement à mastic (66) et **en ce que** le raccordement à mastic (66) est relié à une conduite à mastic (67), s'étendant, de préférence, à l'intérieur du pieu de fondation (3), pour l'alimentation d'une masse de scellement (7), notamment du mastic.

13. Procédé pour réaliser une installation de fondation de pilier unique selon l'une des revendications 9 à 12 avec une fondation pour pilier unique selon l'une des revendications 1 à 8,
- dans lequel le pieu de fondation (3, 41, 74) avec la section de fondation (GA) est introduit dans le fond de la mer (M), de préférence, par vibration et/ou fonçage à impulsion,
- dans lequel, ensuite, dans la direction périphérique du pieu de fondation (3, 41, 74), les cols (9, 64, 76) de plusieurs, notamment deux, trois ou quatre, éléments de renforcement (11, 12, 20, 21, 47, 48), sont introduits, au moins partiellement, dans le fond de la mer (M), de préférence par vibrations,
- dans lequel les éléments de renforcement (11, 12, 20, 21, 47, 48) sont positionnés côte à côte par le biais d'une introduction, au moins partielle, notamment l'un après l'autre dans le fond de la mer (M), ou avant l'introduction, au moins partielle, dans le fond de la mer (M),
- dans lequel les côtés adjacents des éléments de renforcement (11, 12, 20, 21, 47, 48) adjacents, de préférence par le biais d'une introduction, au moins partiellement, dans le fond de la mer (M) ou avant l'introduction, au moins partiellement, dans le fond de la mer (M), sont reliés entre eux par complémentarité de forme, articulée et/ou par de force, et
- dans lequel la section de renforcement (VA) du pieu de fondation (3, 41, 74), au-dessus du fond de la mer (M), est reliée à la manchette (5, 45, 63, 75) du renforcement de fondation (4, 22, 44, 61).

14. Procédé selon la revendication 13,
- dans lequel les côtés, respectivement adjacents entre eux dans la direction périphérique, des éléments de manchette (13, 15, 29, 30, 49, 50), des éléments de col (14) et/ou des éléments de support (10, 52, 53) sont reliés les uns aux autres, de préférence par l'introduction, au moins partielle, dans le fond de la mer (M) ou avant l'introduction, au moins partielle, dans le fond de la mer (M) par complémentarité de forme, articulée, et/ou de force et
- dans lequel au moins deux éléments de manchette (13, 15, 29, 30, 49, 50) adjacents d'éléments de renforcement (11, 12, 20, 21, 47, 48) adjacents sont positionnés en chevauchement, par section, dans la direction périphérique, notamment pour la formation d'un manchette (5, 45, 63, 75) fermée dans la direction radiale.

15. Procédé selon la revendication 13 ou 14,
- dans lequel la manchette (5, 45, 63, 75), notamment les éléments de manchette (13, 15, 29, 30, 49, 50), est reliée, avec le côté extérieur de la section de renforcement (VA) du pieu de fondation (3, 41, 74), espacé par un interstice (6, 62, 79), par une masse de scellement (7), notamment du mastic, qui est introduite dans l'interstice (6, 62, 79) et/ou
- dans lequel la masse de scellement (7), notamment du mastic, est alimentée, de préférence par le biais d'une conduite à mastic (67, 73) passant à l'intérieur du pieu de fondation (3, 74) et par le biais d'un raccordement à mastic (66, 71, 72) dans la manchette (5, 45, 63, 75), notamment dans au moins un élément de manchette (49, 50) et/ou dans le support (8), notamment dans au moins un élément de support (10, 52, 53).
